Europäisches Patentamt

European Patent Office

Office européen des brevets

(19)

(11) **EP 0 641 375 B1**

(12) **EUROPEAN PATENT SPECIFICATION**

(45) Date of publication and mention
of the grant of the patent:
**29.12.1997 Bulletin 1997/52**

(21) Application number: **92918087.5**

(22) Date of filing: **05.08.1992**

(51) Int Cl.6: **C10G 69/02**, C10G 69/08

(86) International application number:
**PCT/US92/06537**

(87) International publication number:
**WO 93/04146 (04.03.1993 Gazette 1993/06)**

(54) **HYDROCARBON UPGRADING PROCESS**

VERFAHREN ZUR VERBESSERUNG DER QUALITÄT VON KOHLENWASSERSTOFFEN

PROCEDE D'AMELIORATION D'HYDROCARBURES

(84) Designated Contracting States:
**BE DE FR GB IT NL**

(30) Priority: 15.08.1991 US 745311
12.03.1992 US 850106
08.05.1992 US 880373
01.06.1992 US 891124
01.06.1992 US 891134
01.06.1992 US 891248
15.07.1992 US 913326
20.07.1992 US 915571

(43) Date of publication of application:
**08.03.1995 Bulletin 1995/10**

(73) Proprietor: **MOBIL OIL CORPORATION**
**Fairfax, Virginia 22037-0001 (US)**

(72) Inventors:
• **APELIAN, Minas, Robert**
**Vincentown, NJ 08088-8976 (US)**
• **COLLINS, Nick, Allen**
**Medford, NJ 08055-9371 (US)**
• **DEGNAN, Thomas, Francis, Jr.**
**Moorestown, NJ 08057-2109 (US)**
• **FLETCHER, David, Lee**
**Turnersville, NJ 08012-1557 (US)**

• **HARANDI, Mohsen, Nadimi**
**Longhorn, PA 19047-1680 (US)**
• **HILBERT, Timothy, Lee**
**Sewell, NJ 08080-2717 (US)**
• **KONDIS, Edward Frank**
**New Hope, PA 18938-1287 (US)**
• **McGOVERN, Stephen, James**
**Mantua, NJ 08051-1741 (US)**
• **OWEN, Hartley**
**Belle Mead, NJ 08502 (US)**
• **SHIH, Stuart, Shan-San**
**Cherry Hill, NJ 08003-1927 (US)**
• **SARLI, Michael, Sebastian**
**Haddonfield, NJ 08033-2523 (US)**

(74) Representative:
**Jones, Helen Marjorie Meredith et al**
**Gill Jennings & Every,**
**Broadgate House,**
**7 Eldon Street**
**London EC2M 7LH (GB)**

(56) References cited:
EP-A- 0 022 883          FR-A- 1 390 267
US-A- 3 549 515          US-A- 3 728 251
US-A- 4 057 488          US-A- 4 210 521
US-A- 4 753 720          US-A- 4 827 076
US-A- 5 000 839

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

This invention relates to a process for the upgrading of hydrocarbon streams, more particularly to a process for upgrading gasoline boiling range petroleum fractions containing substantial proportions of sulfur impurities.

Heavy petroleum fractions, such as vacuum gas oil, or even resids such as atmospheric resids, may be catalytically cracked to lighter and more valuable products, especially gasoline. Catalytically cracked gasoline forms a major part of the gasoline product pool in the United States. It is conventional to recover the product of catalytic cracking and to fractionate the cracking products into various fractions such as light gases; naphtha, including light and heavy gasoline; distillate fractions, such as heating oil and Diesel fuel; lube oil base fractions; and heavier fractions.

Where the petroleum fraction being catalytically cracked contains sulfur, the products of catalytic cracking usually contain sulfur impurities which normally require removal, usually by hydrotreating, in order to comply with the relevant product specifications. These specifications are expected to become more stringent in the future, possibly permitting no more than about 300 ppmw sulfur in motor gasolines. In naphtha hydrotreating, the naphtha is contacted with a suitable hydrotreating catalyst at elevated temperature and somewhat elevated pressure in the presence of a hydrogen atmosphere. One suitable family of catalysts which has been widely used for this service is a combination of a Group VIII and a Group VI element, such as cobalt and molybdenum, on a suitable substrate, such as alumina.

Sulfur impurities tend to concentrate in the heavy fraction of the gasoline, as noted in US-A-3,957,625 which proposes a method of removing the sulfur by hydrodesulfurisation of the heavy fraction of the catalytically cracked gasoline so as to retain the octane contribution from the olefins which are found mainly in the lighter fraction. In one type of conventional, commercial operation, the heavy gasoline fraction is treated in this way. As an alternative, the selectivity for hydrodesulfurisation relative to olefin saturation may be shifted by suitable catalyst selection, for example, by the use of a magnesium oxide support instead of the more conventional alumina.

In the hydrotreating of petroleum fractions, particularly naphthas, and most particularly heavy cracked gasoline, the molecules containing the sulfur atoms are mildly hydrocracked so as to release their sulfur, usually as hydrogen sulfide. After the hydrotreating operation is complete, the product may be fractionated, or even just flashed, to release the hydrogen sulfide and collect the now sweetened gasoline. Although this is an effective process that has been practiced on gasolines and heavier petroleum fractions for many years to produce satisfactory products, it does have disadvantages.

Naphthas, including light and full range naphthas, may be subjected to catalytic reforming so as to increase their octane numbers by converting at least a portion of the paraffins and cycloparaffins in them to aromatics. Fractions to be fed to catalytic reforming, such as over a platinum type catalyst, also need to be desulfurised before reforming because reforming catalysts are generally not sulfur tolerant. Thus, naphthas are usually pretreated by hydrotreating to reduce their sulfur content before reforming. The octane rating of reformate may be increased further by processes such as those described in US-A-3,767,568 and 3,729,409 in which the reformate octane is increased by treatment with ZSM-5.

Aromatics are generally the source of high octane numbers, particularly very high research octane numbers, and are therefore desirable components of the gasoline pool. They have, however, been the subject of severe limitations as a gasoline component because of possible adverse effects on the ecology, particularly with reference to benzene. It has therefore become desirable, as far as is feasible, to create a gasoline pool in which the higher octanes are contributed by the olefinic and branched chain paraffinic components, rather than the aromatic components. Light and full range naphthas can contribute substantial volume to the gasoline pool, but they do not generally contribute significantly to higher octane values without reforming.

Cracked naphtha, as it comes from the catalytic cracker and without any further treatments, such as purifying operations, has a relatively high octane number as a result of the presence of olefinic components. It also has an excellent volumetric yield. As such, cracked gasoline is an excellent contributor to the gasoline pool. It contributes a large quantity of product at a high blending octane number. In some case, this fraction may contribute as much as up to half the gasoline in the refinery pool. Therefore, it is a most desirable component of the gasoline pool, and it should not be lightly tampered with.

Other highly unsaturated fractions boiling in the gasoline boiling range, which are produced in some refineries or petrochemical plants, include pyrolysis gasoline. This is a fraction which is often produced as a by-product in the cracking of petroleum fractions to produce light unsaturates, such as ethylene and propylene. Pyrolysis gasoline has a very high octane number but is quite unstable in the absence of hydrotreating because, in addition to the desirable olefins boiling in the gasoline boiling range, it also contains a substantial proportion of diolefins, which tend to form gums after storage or standing.

Hydrotreating of any of the sulfur containing fractions which boil in the gasoline boiling range causes a reduction in the olefin content, and consequently a reduction in the octane number, and as the degree of desulfurisation increases, the octane number of the normally liquid gasoline boiling range product decreases. Some of the hydrogen may also cause some hydrocracking as well as olefin saturation, depending on the conditions of the hydrotreating operation.

Various proposals have been made for removing sulfur while retaining the more desirable olefins. US-A-4,049,542, for instance, discloses a process in which a copper catalyst is used to desulfurise an olefinic hydrocarbon feed such as catalytically cracked light naphtha.

In any case, regardless of the mechanism by which it happens, the decrease in octane which takes place as a consequence of sulfur removal by hydrotreating creates a tension between the growing need to produce gasoline fuels with higher octane number and - because of current ecological considerations - the need to produce cleaner burning, less polluting fuels, especially low sulphur fuels. This inherent tension is yet more marked in the current supply situation for low sulphur, sweet crudes.

Other processes for treating catalytically cracked gasolines have also been proposed in the past. For example, US-A-3759821 discloses a process for upgrading catalytically cracked gasoline by fractionating it into a heavier and a lighter fraction and treating the heavier fraction over a ZSM-5 catalyst, after which the treated fraction is blended back into the lighter fraction. Another process in which the cracked gasoline is fractionated prior to treatment is described in US-A-4062762 which discloses a process for desulphurising naphtha by fractionating the naphtha into three fractions each of which is desulphurised by a different procedure, after which the fractions are recombined.

The selective transformation of hydrocarbons under reforming conditions over a zeolite is described in French Patent 1390267.

The product of saturated products from a catalytically cracking naphtha followed by hydrodesulfurization is disclosed in EP-A-0022883.

Isomerization and desulphurisation of a hydrocarbon boiling in the range of about 50°F to 200°F is disclosed in US Patent 4827076.

A process for upgrading olefinic gasoline to improve octane over an acidic zeolite is disclosed in US Patent 4753720.

We have now devised a process for catalytically desulphurising cracking fractions in the gasoline boiling range which enables the sulphur to be reduced to acceptable levels without substantially reducing the octane number. In favourable cases, the volumetric yield of gasoline boiling range product is not substantially reduced and may even be increased so that the number of octane barrels of product produced is at least equivalent to the number of octane barrels of feed introduced into the operation.

The process may be utilised to desulphurise light and full range naphtha fractions while maintaining octane so as to obviate the need for reforming such fractions, or at least without the necessity of reforming such fractions to the degree previously considered necessary. Since reforming generally implies a significant yield loss, this constitutes a marked advantage of the present process.

According to the present invention, a sulfur-containing olefinic, catalytically cracked naphtha boiling in the gasoline boiling range is hydrotreated, in a first stage, under conditions which remove at least a substantial proportion of the sulfur. Hydrotreated intermediate product is then treated, in a second stage, by contact with a catalyst on acidic functionality in the presence of hydrogen to effect cracking of the paraffins to convert the hydrotreated intermediate product fraction to a fraction in the gasoline boiling range of higher octane value.

## THE DRAWINGS

Figure 1 is a series of plots of the sulfur content of the product as a function of the operating temperature of hydrotreating and second stage conversion using a ZSM-5 catalyst in the second process step;

Figure 2 is a series of plots of the octane number of the product as a function of the operating temperature with a ZSM-5 catalyst in the second process step;

Figure 3 is a plot of the yield of C3/C4 olefins plus isobutene as a function of the operating temperature using a ZSM-5 catalyst in the second process step;

Figure 4 is a plot of the sulfur content of the product as a function of the operating temperature of hydrotreating and second stage conversion using MCM-22 catalyst in the second process step;

Figure 5 is a plot of the octane number of the product as a function of the operating temperature using MCM-22 catalyst in the second process step;

Figure 6 plots 216°C+ conversion against temperature using MCM-22 as catalyst in the second processing step;

Figure 7 plots sulfur content against temperature using zeolite beta as second stage catalyst;

Figure 8 plots octane change against temperature using zeolite beta as second stage catalyst;

Figure 9 plots 216°C conversion against temperature using zeolite beta as second stage catalyst;

Figure 10 is a schematic representation of a process according to the invention in which fractions of the feed are separately introduced into the hydrodesulfurisation zone;

Figure 11 is a schematic representation of a process according to the invention in which the second reaction zone operates with essentially sulfide-free hydrogen;

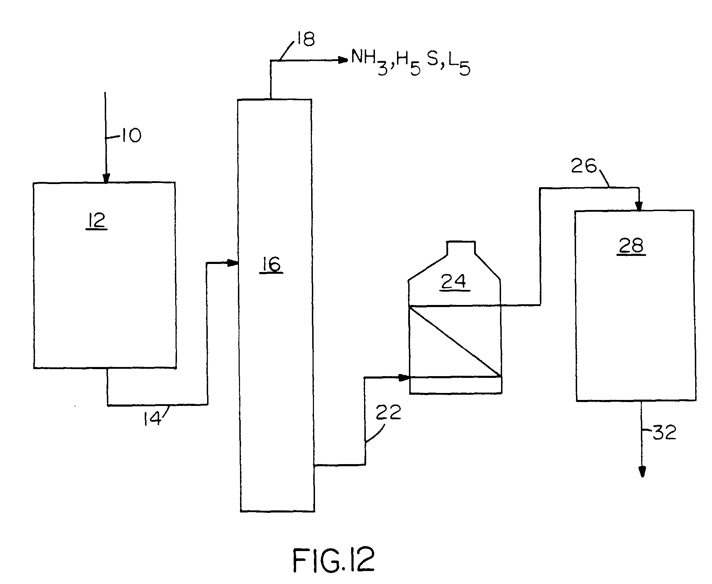

Figures 12 to 14 are simplified schematic diagrams of processes according to the invention in which thermal energy is supplied to the second reaction zone to support the endothermic conversion taking place therein; and

Figure 15 is a simplified schematic diagram of a process according to the invention in which the gasoline upgrading steps are integrated with alkylation.

## Feed

The feed to the process comprises a sulfur-containing olefinic, catalytically cracked Naphtha which boils in the gasoline boiling range. Feeds of this type include light naphthas typically having a boiling range of about C6 to 166°C (330°F), full range naphthas boiling in the range of C5 to 216°C (420°F), heavier naphtha fractions boiling in the range of about 127 to 211°C (260 to 412°F), or heavy gasoline fractions boiling at, or at least within, the range of about 166 to 260°C (330 to 500°F), preferably about 166 to 211°C (330 to 412°F). While the most preferred feed appears at this time to be a heavy gasoline produced by catalytic cracking; or a light or full range gasoline boiling range fraction, the best results are obtained when, as described below, the process is operated with a gasoline boiling range fraction which has a 95 percent point (determined according to ASTM D 86) of at least about 163°C (325°F) and preferably at least about 177°C (350°F), for example 95 percent points of at least about 193°C (380°F) or at least about 220°C (400°F).

The process may be operated with the entire gasoline fraction obtained from the catalytic cracking step, or, alternatively, with part of it. Because the sulfur tends to be concentrated in the higher boiling fractions it is preferable, particularly when unit capacity is limited, to separate the higher boiling fractions and process them through the steps of the present process without processing the lower boiling cut. The cut point between the treated and untreated fractions may vary according to the sulfur compounds present but usually, a cut point in the range of from about 38°C (100°F) to about 150°C (300°F), more usually in the range of about 93°C (200°F) to about 150°C (300°F) will be suitable. The exact cut point selected will depend on the sulfur specification for the gasoline product as well as on the type of sulfur compounds present: lower cut points will typically be necessary for lower product sulfur specifications. Sulfur which is present in components boiling below about 65°C (150°F) is mostly in the form of mercaptans which may be removed by extractive type processes such as Merox but hydrotreating is appropriate for the removal of thiophene and other cyclic sulfur compounds present in higher boiling components e.g. component fractions boiling above about 82°C (180°F). Treatment of the lower boiling fraction in an extractive type process coupled with hydrotreating of the higher boiling component may therefore represent a preferred economic process option. Higher cut points will be preferred in order to minimise the amount of feed which is passed to the hydrotreater, and the final selection of cut point together with other process options such as the extractive type desulfurisation will therefore be made in accordance with the product specifications, feed constraints and other factors.

The sulfur content of these catalytically cracked fractions will depend on the sulfur content of the feed to the cracker as well as on the boiling range of the selected fraction used as the feed in the process. Lighter fractions, for example, will tend to have lower sulfur contents than the higher boiling fractions. As a practical matter, the sulfur content will exceed 50 ppmw and usually will be in excess of 100 ppmw and in most cases in excess of about 500 ppmw. For the fractions which have 95 percent points over about 193°C (380°F) the sulfur content may exceed about 1,000 ppmw and may be as high as 4,000 or 5,000 ppmw or even higher, as shown below. The nitrogen content is not as characteristic of the feed as the sulfur content and is preferably not greater than about 20 ppmw although higher nitrogen levels typically up to about 50 ppmw may be found in certain higher boiling feeds with 95 percent points in excess of about 193°C (380°F). The nitrogen level will, however, usually not be greater than 250 or 300 ppmw. As a result of the cracking which has preceded the steps of the present process, the feed to the hydrodesulfurisation step will be olefinic, with an olefin content of at least 5 and more typically in the range of 10 to 20, e.g. 15-20, weight percent.

## Process Configuration

The selected sulfur-containing, gasoline boiling range feed is treated in two steps by first hydrotreating the feed by effective contact of the feed with a hydrotreating catalyst, which is suitably a conventional hydrotreating catalyst, such as a combination of a Group VI and a Group VIII metal on a suitable refractory support such as alumina, under hydrotreating conditions. Under these conditions, at least some of the sulfur is separated from the feed molecules and converted to hydrogen sulfide, to produce a hydrotreated intermediate product comprising a normally liquid fraction boiling in substantially the same boiling range as the feed (gasoline boiling range), but which has a lower sulfur content and lower octane number than the feed. This hydrotreated intermediate product which also boils in the gasoline boiling range (and usually has a boiling range which is not substantially higher than the boiling range of the feed), is then treated by contact with an acidic catalyst under conditions which produce a second product comprising a fraction which boils in the gasoline boiling range which has a higher octane number than the portion of the hydrotreated intermediate product fed to this second step. The product from this second step usually has a boiling range which is not substantially higher than the boiling range of the feed to the hydrotreater, but it is of lower sulfur content while having a comparable octane rating as the result of the second stage treatment.

The catalyst used in the second stage of the process has a significant degree of acid activity, and for this purpose the most preferred materials are the crystalline refractory solids having an intermediate effective pore size and the topology of a zeolitic behaving material, which, in the aluminosilicate form, has a Constraint Index of about 2 to 12.

In a preferred embodiment of the invention the selected sulfur-containing, gasoline boiling range feed is first split into two or more fractions before being passed to the HDS unit. The fractions are then treated in two steps by first hydrotreating them to remove sulfur while minimising the saturation of olefins, after which the octane loss resulting from olefin saturation during the hydrotreating is restored at least partially by treatment with the acidic catalyst in the next step of the process.

The olefins in the feed are concentrated in the front end together with the mercaptan sulfur while the back end is relatively poorer in olefins but richer in thiophenes and other cyclic sulfur compounds which require more severe desulfurisation conditions than the mercaptans. The compositions of three typical catalytically cracked naphthas, FCC Gasoline No. 1, No. 2 and No. 3, are given below to illustrate the variation in feed properties across the boiling range.

FCC GASOLINE NO. 1

| | Full Range | IBP-133 | 133-167 | 167-185 | 185-200 | 200-233 | 233-267 | 267-300 | 300-315 | 315-333 | 333-367 | 367+ |
|---|---|---|---|---|---|---|---|---|---|---|---|---|
| Pct. of Total Gaso., wt | 100 | 23.2 | 8.1 | 5.3 | 4.5 | 9.7 | 9.0 | 9.6 | 5.0 | 5.5 | 8.2 | 14.4 |
| , Vol | 100 | — | — | — | — | 9.7 | 9.4 | 8.9 | — | — | 7.3 | 12.4 |
| API Gravity | 56.7 | — | — | — | — | 57.2 | 49.8 | 44.1 | — | — | 36.5 | 30.8 |
| Hydrogen, wt% | 12.99 — | 14.40 | 14.01 | 13.79 | 13.25 | 12.53 | 11.91 | 11.69 | 11.62 | 11.65 | 11.42 | |
| Sulfur, wt% | 0.24 | — | 0.03 | 0.07 | 0.09 | 0.13 | 0.19 | 0.23 | 0.26 | 0.27 | 0.28 | 0.71 |
| Mercaptans, ppm | 2 | — | 3 | 1 | <1 | <1 | <1 | 3 | 17 | 3 | 6 | 1 |
| Nitrogen, ppm | 57 | — | 13 | 14 | 15 | 15 | 23 | 45 | 64 | 87 | 150 | 170 |
| Basic Nitrogen, ppm | — | — | <5 | <5 | <5 | <5 | 19 | 28 | 54 | 84 | 132 | 128 |
| Bromine No. | 35.3 | — | 111 | 101.5 | 92.3 | 83.7 | 68.1 | 49.3 | 39.4 | 35.1 | 28.5 | 21.9 |
| Diene No. | — | — | 7.8 | 7.8 | 4.6 | 6.8 | 0.67 | 7 | 6 | 4 | 3 | 0.3 |
| **PONA, wt%** | | | | | | | | | | | | |
| Paraffins | 16.8 | — | — | — | 27.6 | 26.4 | 14.2 | 11.8 | 11.3 | 10.5 | 11.3 | |
| Mono-Naphthenes | 8.1 | — | — | — | 16.3 | 17.1 | 9.2 | 7.2 | 5.8 | 4.6 | 4.2 | — |
| Mono-Olefins | 22.2 | — | — | — | 29.1 | 23.9 | 22.2 | 15.9 | 14.0 | 13.0 | 11.5 | — |
| Di-Naphthenes | 0.6 | — | — | — | 0.0 | 0.0 | 0.4 | 0.4 | 0.6 | 0.8 | 1.1 | — |
| Cyclo & Di-Olefins | 11.9 | — | — | — | 10.1 | 9.2 | 12.8 | 9.4 | 7.0 | 5.7 | 4.8 | — |
| Alkyl Benzenes | 35.4 | — | — | — | 16.7 | 23.1 | 41.0 | 54.8 | 59.9 | 62.4 | 58.7 | — |
| Indenes & Tetralins | 3.9 | — | — | — | 0.1 | 0.2 | 0.2 | 0.5 | 1.5 | 3.0 | 7.8 | — |
| Naphthalenes | 1.0 | — | — | — | 0.0 | 0.0 | 0.0 | 0.0 | 0.0 | 0.0 | 0.6 | — |

## FCC Gasoline No. 2

| Boiling Range, °F | Full Range | 80-167 | 167-200 | 200-233 | 233-267 | 267-300 | 300-333 | 333-367 | 367+ |
|---|---|---|---|---|---|---|---|---|---|
| Pct.of Total Gaso., wt | 100 | 33 | 10.2 | 10.7 | 8.9 | 8.2 | 8.1 | 5.0 | 15.9 |
| , Vol | 100 | 37.3 | 10.7 | 10.7 | 8.6 | 7.6 | 7.3 | 4.4 | 13.5 |
| API Gravity | 57.6 | 81.7 | 65.7 | 57.4 | 49.7 | 43.7 | 38.7 | 35.2 | 29.3 |
| Hydrogen, wt% | 13.16 | — | 14.11 | 13.45 | 12.66 | 11.94 | 11.58 | 11.42 | 11.07 |
| Sulfur, wt% | 0.12 | — | 0.04 | 0.08 | 0.12 | 0.13 | 0.14 | 0.16 | 0.45 |
| Nitrogen, ppm | 56 | — | 7 | 8 | 14 | 30 | 84 | 150 | 210 |
| Basic Nitrogen, ppm | | — | | | | | 79 | | 171 |
| Bromine No. | 70.6 | — | 89.3 | 70.9 | 54.2 | 36.6 | 22.5 | 17.1 | 15.6 |
| Diene content | 0.1 | — | 0.44 | 0.46 | 0.32 | 0.33 | 0.18 | <0.1 | <0.1 |
| Di-olefins, wt% | — | — | 4.0 | 4.5 | 3.4 | 3.7 | 2.2 | 1 | 1 |
| **PONA, wt %** | | | | | | | | | |
| Paraffins | 22.2 | — | 29.2 | 23.9 | 17.8 | 17.2 | 13.3 | 13.1 | 17.1 |
| Mono-Naphthenes | 10.4 | — | 13.8 | 14.1 | 11.1 | 10.2 | 5.3 | 4.2 | 4.7 |
| Mono-Olefins | 21.7 | — | 37.0 | 29.8 | 21.3 | 12.2 | 10.3 | 8.2 | 6.7 |
| Di-Naphthenes | 0.2 | — | 0.0 | 0.0 | 0.4 | 0.5 | 0.7 | 0.9 | 1.1 |
| Cyclo & Di-Olefins | 7.1 | — | 9.5 | 11.0 | 10.2 | 4.8 | 4.1 | 3.1 | 2.9 |
| Alkyl Benzenes | 34.9 | — | 10.5 | 21.0 | 39.1 | 54.9 | 64.0 | 63.1 | 43.7 |
| Indanes & Tetralins | 2.8 | — | 0.0 | 0.1 | 0.1 | 0.2 | 2.2 | 6.8 | 17.6 |
| Naphthalenes | 0.6 | — | 0.0 | 0.0 | 0.0 | 0.0 | 0.0 | 0.6 | 6.2 |

EP 0 641 375 B1

## FCC Gasoline No. 3

| Boiling Range, °F | Full Range | IBP-200 | 200-250 | 250-275 | 275-297 | 297-319 | 319-338 | 338-360 | 360-383 | 383-416 | 416-448 | 448+ |
|---|---|---|---|---|---|---|---|---|---|---|---|---|
| Pct. of Total Gaso., vol. | 100 | 42.7 | 13.8 | 7.2 | 4.9 | 4.9 | 4.8 | 4.9 | 4.2 | 5.0 | 5.0 | 2.6 |
| , wt. | 100.0 | 38.1 | 13.8 | 7.5 | 5.2 | 5.3 | 5.3 | 5.3 | 4.7 | 5.8 | 5.9 | 3.1 |
| | | | | | | | | | | | | |
| Hydrogen, wt | 12.57 | 14.55 | 13.15 | 12.36 | 11.99 | 11.67 | 11.54 | 11.39 | 11.38 | 10.98 | 10.58 | -- |
| Sulfur, wt% | 0.36 | 0.049 | 0.193 | 0.239 | 0.248 | 0.244 | 0.222 | 0.210 | 0.243 | 0.741 | 1.32 | 2.75 |
| Nitrogen, ppm | 53 | 17 | 14 | 16 | 32 | 47 | 69 | 106 | 128 | 113 | 91 | 289 |
| Bromine No. | 53.9 | 94.3 | 55.14 | 37.4 | 28.1 | 22.4 | 17.7 | 15.3 | 13.3 | 11.3 | 10.0 | 10.5 |
| Phenol, wt% | 0.24 | L/T0.0001 | 0.0109 | 0.10 | 0.25 | 0.42 | 0.68 | 0.82 | 0.92 | 0.71 | 0.38 | 0.23 |
| | | | | | | | | | | | | |
| PONA, wt. pct. | | | | | | | | | | | | |
| Paraffins | 23.2 | 39.1 | 24.5 | 19.1 | 17.7 | 17.1 | 15.6 | 15.2 | 14.6 | 16.6 | 15.4 | |
| | | | | | | | | | | | | |
| Monoolefins | 17.8 | 32.2 | 19.5 | 16.8 | 12.8 | 10.0 | 7.7 | 7.0 | 6.2 | 6.0 | 6.1 | |
| Cyclo & Diolefins | 6.1 | 7.6 | 9.9 | 7.8 | 5.1 | 3.5 | 2.3 | 1.7 | 0.8 | 1.6 | 2.6 | |
| Cn H2n-4 | 0.0 | 0.2 | 0.3 | 0.3 | 0.5 | 0.4 | 0.5 | 1.1 | 2.1 | 1.7 | 1.4 | |
| Total Olefins | 23.9 | 40.0 | 29.7 | 25.1 | 18.4 | 13.9 | 10.5 | 9.8 | 9.1 | 9.3 | 10.1 | |
| | | | | | | | | | | | | |
| Monocycloparaffins | 11.0 | 14.1 | 19.4 | 12.8 | 11.3 | 8.7 | 7.1 | 6.0 | 5.7 | 6.8 | 7.0 | |
| Dicycloparaffins | 0.6 | 0.0 | 0.3 | 0.5 | 0.5 | 0.7 | 1.0 | 1.0 | 1.1 | 1.1 | 1.3 | |
| | | | | | | | | | | | | |
| Total Naphthenes | 11.6 | 14.1 | 19.7 | 13.3 | 11.8 | 9.4 | 8.1 | 7.0 | 6.8 | 7.9 | 8.3 | |
| | | | | | | | | | | | | |
| Alkyl Benzenes | 34.5 | 6.4 | 25.9 | 42.6 | 52.0 | 55.9 | 61.2 | 58.1 | 53.7 | 34.9 | 26.0 | |
| Indanes & Tetralins | 4.4 | 0.2 | 0.1 | 0.1 | 0.1 | 3.1 | 3.8 | 8.3 | 14.5 | 21.6 | 22.2 | |
| Naphthalenes | 2.3 | 0.2 | 0.0 | 0.0 | 0.0 | 0.6 | 0.8 | 1.6 | 1.4 | 9.6 | 17.8 | |
| | | | | | | | | | | | | |
| Total Aromatics | 41.2 | 6.8 | 26.0 | 42.7 | 52.1 | 59.6 | 65.8 | 68.0 | 69.6 | 66.1 | 66.0 | |

These typical gasoline compositions show that there are marked compositional changes across the boiling range of the cracked naphtha feeds. The present embodiment exploits these changes in a way which promotes the removal of the sulfur while at the same time minimising the saturation of the olefins which make a significant contribution to the octane of the final gasoline. To this end the fractions are introduced at spaced locations along the length of the fixed-bed HDS reactor with the sulfur-rich, olefin-poor, higher boiling fractions being fed into the reactor at the inlet end with the other fraction or fractions introduced into the reactor in order of decreasing boiling range. In this way the sulfur compounds which require the more severe conditions for effective removal are given an extended contact time while the more readily removed mercaptans are introduced towards the end of the reactor together with the olefin-rich portions of the feed which require, at the most, only a low severity treatment with a short contact time.

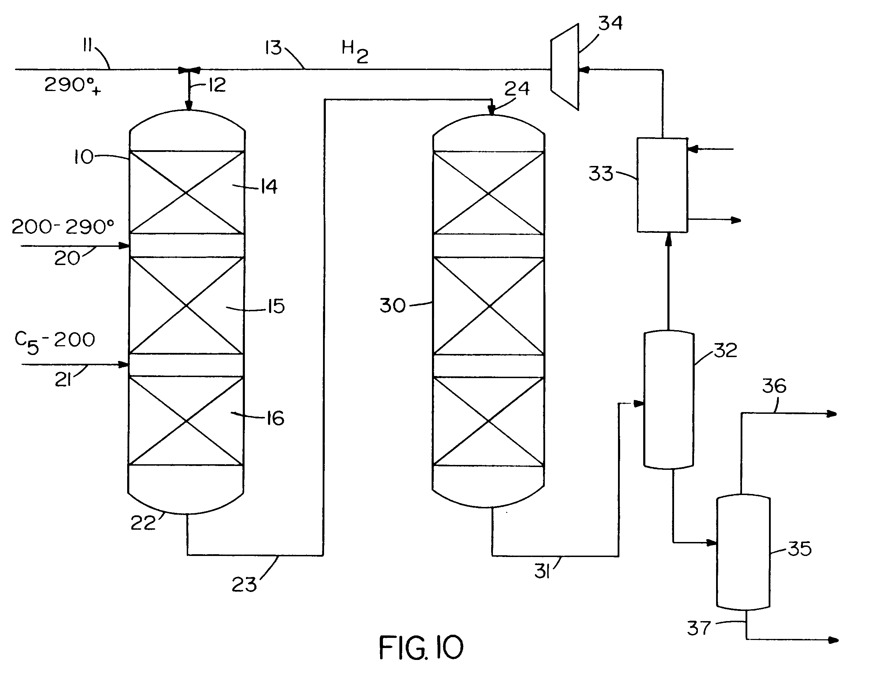

Figure 10 illustrates in simplified form a suitable process configuration for carrying out the present embodiment. The cracked gasoline feed is split into three fractions which are in order of increasing boiling range: C5-200°, 200°-290° and 290°F+ (C5-93°, 93°- 143°, 143°C+). The highest boiling 290°F+ (93°C+) fraction from line 11 is introduced into hydrodesulfurisation reactor 10 through inlet 12 together with hydrogen recycled through line 13. The HDS reactor has three superimposed catalyst beds, 14, 15 and 16, each comprising a hydrodesulfurisation catalyst, as described below. Distribution trays and vapor/liquid mixing devices are suitably in the interbed spaces and above the first bed, as in conventional.

The next lower boiling fraction of the feed boiling from 200° to 290°F (about 93° to 143°C) is introduced into the reactor through side inlet 20 so that this portion of the feed enters the reactor after the first catalyst bed 14. The effluent from bed 14 is then mixed with the incoming fraction from inlet 20 and the two then pass through second catalyst bed 15 where further hydrodesulfurisation reactions take place.

The lightest portion of the feed, the C5-200°F (C5-93°C) fraction, is introduced into the reactor after the second bed through inlet 21. It mixes with the effluent from bed 15 and the combined material then passes through the final catalyst bed 16 before passing out of the reactor through outlet 22 to line 23.

The hydrotreated intermediate product passes along line 23 to the inlet 24 of the second stage reactor 30 in which the hydrotreated intermediate product is passed over the acidic catalyst to restore octane lost in the hydrodesulfurisation step. The effluent from reactor 30 passes through line 31 to high temperature separator 32 in which the hydrogen together with ammonia and hydrogen sulfide is removed from the hydrocarbons. The hydrogen is passed to amine scrubber 33 in which the ammonia and hydrogen sulfide are removed and the purified hydrogen is recompressed in compressor 34 before being returned to reactor 10 through line 13. The hydrocarbons are separated in low temperature separator 35 with the light ends passing out through outlet 36 and the upgraded gasoline through outlet 37.

The injection of the feed fractions along the length of the HDS reactor progressively increases the space velocity of the feed in the catalyst beds, so that the treatment severity in each bed progressively decreases. In addition, the treatment duration of each fraction is shorter, according to the injection point, with the lowest boiling fractions having the shorter or shortest treatment times. Together, these effects are effective to reduce the saturation of the olefins which, as noted above, are found mostly in the lower boiling fractions while maintaining the desulfurisation of the higher boiling fractions in which the sulfur compounds tend to be concentrated. Some olefin saturation will take place but will be reduced as a result of the stepwise injection of the feed but is less than would otherwise occur, creating a potential for a reduction in hydrogen consumption. At the same time, injection of the heaviest fraction of the gasoline feed at the beginning of the hydrodesulfurisation reactor promotes the desulfurisation of this sulfur-rich but olefin-poor fraction.

Other advantages also accrue from the spaced injection of the feed fractions. Because the nitrogen is introduced progressively along the length of the reactor, the ammonia partial pressure in the first bed of the reactor is relatively lower and the potential for catalyst deactivation by sorption of ammonia is reduced, especially at the lower temperatures prevailing at the reactor inlet before the hydrogenation exotherm sets in to raise the temperature of the bed. The progressive introduction of the nitrogen as well as of the sulfur also leaves the hydrogen more available to deal with the thiphenes and other heterocyclics which predominate in the heavier fractions of the cracked feed. If introduced into the reactor at a lower temperature than the bed temperature, the feed will also provide quench for the hydrotreating reactions, compensating for the reaction exotherm. The introduction of the olefin-poor fraction(s) at the beginning of the reactor will also tend to limit the exotherm by reducing the exothermic olefin hydrogenation reactions in the upper part of the reactor; in the lower part of the reactor where most of the olefins enter, the space velocity is higher and the heat of reaction will be carried away by the greater volume of material passing through this portion of the reactor.

The spaced introduction of the cracked feed therefore represents a favourable configuration for the gasoline upgrading process, permitting the feed to be segregated according to olefin and sulfur contents and treated in a manner which benefits both the low sulfur olefin-rich front end as well as the low-olefin sulfur-rich back end, beside conferring processing improvements such as a potential for reducing hydrogen consumption.

The cracked feed may be fractionated into whatever number of fractions may be convenient for the equipment or according to the olefin and sulfur distributions in the cracked feed. At least two fractions are of course required and three, as described above, will result in the advantages described. More than three will not normally result in any further improvement and therefore will not normally be preferred. Cut points between the fractions will depend on the boiling range of the original cracked feed as well as the sulfur distribution in the feed. In the case of the light naphtha mentioned above, extending from about C6 to 330°F (C6 to 165°C), a cut point of about 250°F (about 120°C) for a two way split or at about 200° and 260°F (about 93° and 127°C) for a three way split will normally be satisfactory. For a full range naphtha typically having a boiling range of about C5 to 420°F (C5 to 215°C), a cut at 300°F (about 150°C) for a two way split or at 250° and 350°F (about 120 and 177°C) for a three way split will be typical. With feeds which have extended 95 percent points above about 380°F, it will normally suffice if the highest boiling fraction has an initial point of about 290°F, as described above since the olefin content above this point is relatively low while the sulfur content is quite high. Further fractionation at higher temperatures will therefore yield no further advantage.

The spaced introduction of the feed will also affect the temperature profile of the hydrotreating bed, and this effect will vary according to the temperature of the feed fractions entering the reactor at any given point.

Hydrotreating

The temperature of the hydrotreating step is suitably from about 220 to 454°C (400 to 850°F), preferably about 260 to 427°C (500 to 800°F) with the exact selection dependent on the desulfurisation desired for a given feed and catalyst. Because the hydrogenation reactions which take place in this stage are exothermic, a rise in temperature takes place along the reactor; this is actually favorable to the overall process when it is operated in the cascade mode because the second step is one which implicates cracking, an endothermic reaction. In this case, therefore, the conditions in the first step should be adjusted not only to obtain the desired degree of desulfurisation but also to produce the required inlet temperature for the second step of the process so as to promote the desired shape-selective cracking reactions in this step. A temperature rise of about 11 to 111°C (20 to 200°F) is typical under most hydrotreating conditions and with reactor inlet temperatures in the preferred 260 to 427°C (500 to 800°F) range, will normally provide a requisite initial temperature for cascading to the second step of the reaction. When operated in the two-stage configuration with interstage separation and heating, control of the first stage exotherm is obviously not as critical; two-stage operation may be preferred since it offers the capability of decoupling and optimising the temperature requirements of the individual stages.

Since the feeds are readily desulfurised, low to moderate pressures may be used, typically from about 500 to 1500 psig (about 445 to 10443 kPa), preferably about 300 to 1000 psig (about 2170 to 7,000 kPa). Pressures are total system pressure, reactor inlet. Pressure will normally be chosen to maintain the desired aging rate for the catalyst in use. The space velocity (hydrodesulfurisation step) is typically about 0.5 to 10 LHSV (hr$^{-1}$), preferably about 1 to 6 LHSV (hr$^{-1}$). The hydrogen to hydrocarbon ratio in the feed is typically about 500 to 5000 SCF/Bbl (about 90 to 900 n.1.1$^{-1}$.), usually about 1000 to 2500 SCF/B (about 180 to 445 n.1.1$^{-1}$.). The extent of the desulfurisation will depend on the feed sulfur content and, of course, on the product sulfur specification with the reaction parameters selected accordingly. It is not necessary to go to very low nitrogen content in the feed to the second step of the process; if it is necessary, however, to increase the denitrogenation in order to obtain a desired level of activity in the second step, the operating conditions in the first step may be adjusted accordingly.

The catalyst used in the hydrodesulfurisation step is suitably a conventional desulfurisation catalyst made up of a Group VI and/or a Group VIII metal on a suitable substrate. The Group VI metal is usually molybdenum or tungsten and the Group VIII metal usually nickel or cobalt. Combinations such as Ni-Mo or Co-Mo are typical. Other metals which possess hydrogenation functionality are also useful in this service. The support for the catalyst is conventionally a porous solid, usually alumina or silica-alumina, but other porous solids such as magnesia, titania or silica, either alone or mixed with alumina or silica-alumina may also be used, as convenient.

The particle size and the nature of the hydrotreating catalyst will usually be determined by the type of hydrotreating process which is being carried out, such as: a down-flow, liquid phase, fixed bed process; an up-flow, fixed bed, trickle phase process; an ebulating, fluidised bed process; or a transport, fluidised bed process. All of these different process schemes are generally well known in the petroleum art, and the choice of the particular mode of operation is a matter left to the discretion of the operator, although the fixed bed arrangement are preferred for simplicity of operation.

A change in the volume of gasoline boiling range material typically takes place in the first step. Although some decrease in volume occurs as the result of the conversion to lower boiling products (C5$^-$), the conversion to C5$^-$ products is typically not more than 5 vol percent and usually below 3 vol percent and is normally compensated for by the increase which takes place as a result of aromatics saturation. An increase in volume is typical for the second step of the process where, as the result of cracking the back end of the hydrotreated feed, cracking products within the gasoline boiling range are produced. An overall increase in volume of the gasoline boiling range (C5$^+$) materials may occur.

It is advantageous that the endothermic cracking reactions follow the hydrodesulfurisation step, which is exothermic, because the exotherm of the hydrodesulfurisation can be controlled to supply sufficient heat for the cracking reactions. However this requires a degree of control over the hydrodesulfurisation step which in some cases may not be entirely efficient from a manufacturing standpoint. Also, a higher exotherm can shorten the life of the hydrodesulfurisation catalyst. To overcome these problems and to optimise conditions in both reaction zones, it may be desirable to provide an external source of at least a portion of the heat necessary for the endothermic reactions.

According to a particular embodiment of the invention, therefore, there is provided a process for supplying heat to the endothermic reaction zone to facilitate the octane restoring reactions. The process will extend the hydrodesulfurisation catalyst's life and facilitate control over the first and second reaction steps, which require different reaction conditions. In favourable cases, the volumetric yield for the gasoline boiling range product is not substantially reduced and may even be increased so that the number of octane barrels of product produced is at least equivalent to the number of octane barrels of feed introduced into the operation. The process may be utilized to desulfurise light and full range naphtha fractions and maintain at least the original octane of the feed. This process obviates the need for reforming the bulk of the naphtha fractions and lessens the degree of reforming previously considered necessary. Since reforming generally implies a significant yield loss, this constitutes a marked advantage.

Addition of heat to the second reaction zone may be accomplished in a variety of ways which include interstage heating of at least a portion of the hydrodesulfurised effluent by a furnace or reactor heat exchanger.

Heat is added to the process to impart sufficient sensible heat for the endothermic reactions of the second reaction zone. The hydrodesulfurisation is conducted in a first stage to produce a hydrodesulfurised intermediate product. Heat is added to at least a portion of the intermediate product to raise its temperature to a degree sufficient to facilitate cracking reactions in the second stage. Thereafter, the hot hydrodesulfurised intermediate is introduced to the second reaction zone to increase its octane. Interstage separation can be used to remove the inorganic sulfur and nitrogen as hydrogen sulfide and ammonia, respectively, as well as the light ends (i.e. C5⁻), however, this is not entirely necessary.

The thermal energy can be provided by a conventional furnace through which the intermediate passes on its way to the second reaction zone. In this regard, the maximum temperature of the furnace outlet should be monitored to avoid yield loss due to thermal cracking of the feed.

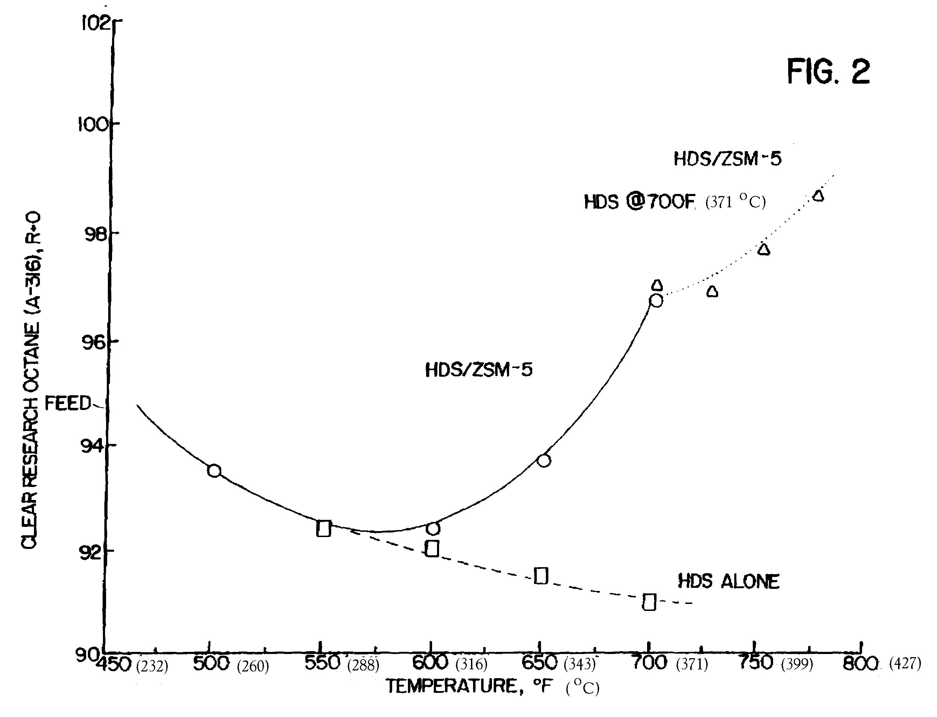

Referring to Fig. 2, an FCC naphtha is charged via line 10 to hydrodesulfurisation zone 12 where it is contacted with a hydrodesulfurisation catalyst. The hydrodesulfurised product is withdrawn via conduit 14 and, optionally, introduced to separation zone 16 which facilitates separation of the inorganic sulfur and nitrogen as well as olefin streams boiling below the gasoline boiling range, e.g. C5⁻. These are withdrawn via line 18. The hydrodesulfurised intermediate product is passed, via conduit 22 through process furnace 24. The temperature of the intermediate product stream is elevated to the desired extent and the heated intermediate stream then withdrawn via line 26 and charged to the octane restoration zone 28, from which the octane restored product is withdrawn via line 32.

The heater firing rate controls the quantity of heat transferred to the process stream and this depends upon the temperature of the intermediate product introduced to the heater. If interstage separation is not utilized then the intermediate feed stream will retain process heat from the exotherm of the hydrodesulfurisation zone and this will be taken into consideration when adding heat. It will be useful to establish a heater outlet temperature necessary for optimum conditions in the second reaction zone and this will enable the refiner to optimise conditions in the first stage for hydrodesulfurisation.

Heat exchange operation by circulating an effective heat transfer medium through a heat exchanger positioned between the first and second reaction zones is also contemplated. The heat transfer medium circulated through the heat exchanger can be any fluid suitable for carrying the heat necessary to impart a sufficient reaction temperature to the second reaction zone. Representative of suitable heat transfer media include water, in any phase; petroleum oil, in any phase; a molten salt such as $Na_2CO_3$, $NaNO_3$, $NaNO_2$ or $KNO_3$; synthetic fluid; or other known heat transfer fluid. Suitable heat transfer fluids, their advantages and disadvantages, are described in more detail in Kirk-Othmer, 12 Encyclopedia of Chemical Technology, pp 171-189 (1980).

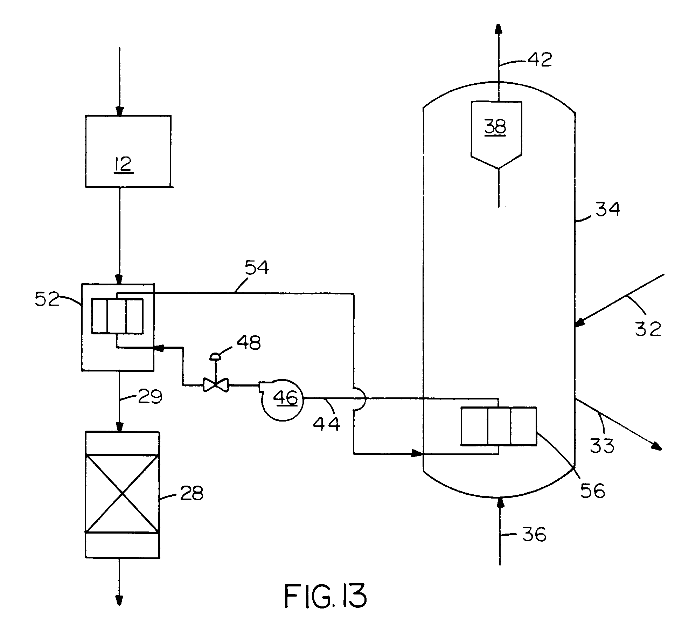

Heat can be transferred to the heat transfer medium by heat exchange with FCC (fluid catalytic cracking). In one embodiment, using heat exchange with the FCC unit, heat is transferred from an FCC regenerator to the second reaction zone via a heat exchanger. Referring to Fig 13, deactivated cracking catalyst from an FCC reactor (not shown) flows through line 32 to regenerator vessel 34. Coke deposited on the catalyst burns in the presence of an oxidising regenerating gas charged to the regenerator 34 via line 36. This yields substantially inert flue gas and regenerated cracking catalyst. The regenerated cracking catalyst leaves vessel 34 and enters cyclone separator 38 in which flue gas and regenerated catalyst are separated. The flue gas flows out of vessel 34 though line 42 from which it is transported to a heat recovery unit.

A stream of heat transfer medium flows through line 44 which is equipped with pump 46 and flow control valve 48 and enters reactor heat exchanger 52 positioned upstream of octane restoration zone 28. The heat transfer medium flows through the reactor heat exchanger 52 and is cooled as thermal energy is transferred to the intermediate product introduced from the first reaction zone 12. From line 54 the cooled heat transfer medium is transported back to the reheat exchanger located within the FCC regenerator 34 for reheating. The heated feed is passed to the second reaction zone 28 via line 29.

In this manner the heat transfer medium controls the quantity of heat transferred to the second reaction zone. Although the FCC regenerator temperature varies with FCC unit operation, it typically ranges from about 480 to 769°C (900 to 1400°F) which is appropriate for providing the necessary heat. A plurality of exchanger tube banks in parallel can be used, although only one is shown in Fig. 2.

The flue gas, mentioned above, is usually sent to a heat recovery unit for generation of steam. This can also be used as a heat source for the endothermic reactions of the instant invention. Heat exchange may also be supplied from a hot process stream of the FCC unit. A representative example of a hot process stream includes main column bottoms; that is, any residue remaining in the FCC distillation unit after the highest boiling material to be distilled has been removed. Another heat source from the FCC unit is the thermal energy generated in cooling the heavy cycle oil (HCO) used in pump around operation during FCC product distillation. Thermal energy generated from catalyst cooling can also be used as a heat source. In this embodiment, the hot catalyst is cooled by heat exchanger through which a cool heat transfer medium passes for heating. The heat transfer medium heated by the hot catalyst then passes to the second reaction zone heat exchanger. Although it may be difficult to employ, direct heat exchange can also be utilised in which the hot catalyst is circulated through the heat exchanger.

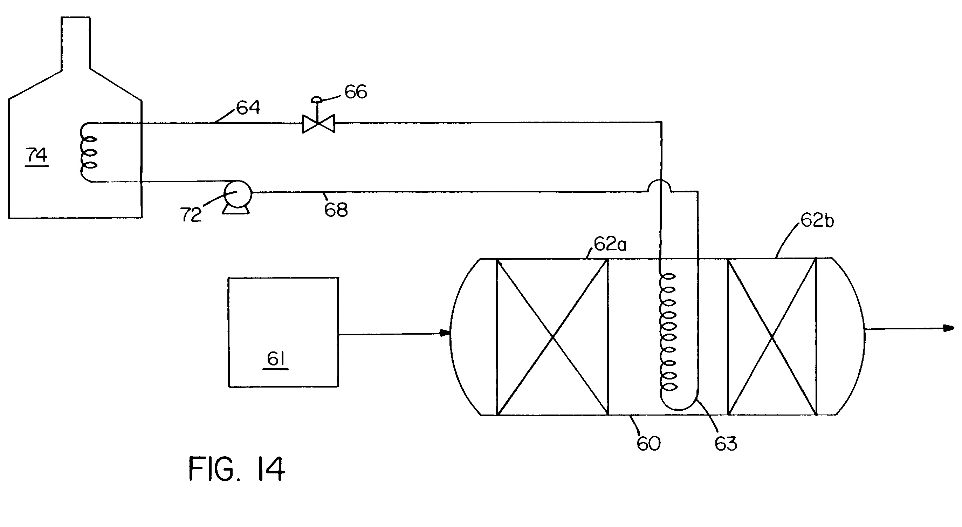

In an alternative embodiment shown in Fig. 14, the exotherm of the first reaction zone is used to advantage in cascade operation. In this process the heat from the rise in temperature of the first step is used to supply a portion of the heat necessary for the second step cracking reactions. However, a significant proportion of the heat is supplied by a heat exchanger within the second reaction zone which provides and maintains the reactor temperature necessary to optimise the cracking reactions.

Referring to Fig. 14, cascade operation with a heat exchanger located within fixed bed reactor 60 of the second reaction zone is shown. The first reaction zone 61 in which hydrotreating occurs is located in front of fixed bed reactor 60 in which octane restoration occurs. Heat exchanger 63 is located between the first octane restoration region 62a and the second octane restoration region 62b. The hot hydrodesulfurised intermediate product flows from the first reaction zone 61 to reactor 60 for effective contact over a catalyst of acidic functionality. The temperature within reactor 60 lowers as thermal energy is absorbed during the endothermic reactions of the first octane restoration regions 62a. To increase the temperature, heat is introduced via reactor heat exchanger 63. A stream of heated heat transfer medium enters the reactor heat exchanger 63 through conduit 64. Flow control valve 66 controls the flow of heat transfer medium. After the heat transfer medium has accomplished effective transfer of thermal energy to the reaction, the cooled stream exits the heat exchanger 63 via conduit 68 equipped with pump 72 and is returned to a high temperature heat source which can be a process furnace 74, as shown in Fig. 14, or other heat source. Then the hot heat transfer medium circulates back to heat exchanger 63. In this way, the heat exchange adds heat to the octane restoration zone to facilitate cracking reactions.

Octane Restoration - Second Step Processing

After the hydrotreating step, the hydrotreated intermediate product is passed to the second step of the process in which cracking takes place in the presence of the acidic functioning catalyst and hydrogen. The effluent from the hydrotreating step may be subjected to an interstage separation in order to remove the inorganic sulfur and nitrogen as hydrogen sulfide and ammonia as well as light ends but this is not necessary and, in fact, it has been found that the first stage can be cascaded directly into the second stage. This can be done very conveniently in a down-flow, fixed-bed reactor by loading the hydrotreating catalyst directly on top of the second stage catalyst.

The separation of the light ends at this point may be desirable if the added complication is acceptable since the saturated C4- C6 fraction from the hydrotreater is a highly suitable feed to be sent to the isomeriser for conversion of this fraction to non-gasoline (C5⁻) products in the second stage of the process. Another process configuration with potential advantages is to take a heart cut, for example, a 90-150°C (195-302°C) fraction, for the first stage product and send it to the reformer where the low octane naphthenes which make up a significant portion of this fraction are converted to light octane aromatics. The heavy portion of the first stage effluent is, however, sent to the second step for restoration of lost octane by treatment with the acid catalyst. The hydrotreatment in the first stage is effective to desulfurise and denitrogenate the catalytically cracked naphtha which permits the heart cut to be processed in the reformer. Thus, the preferred configuration in this alternative is for the second stage to process the C8⁺ portion of the first stage effluent and with feeds which contain significant amounts of heavy components up to about C13, e.g with C9-C13 fractions going to the second stage, improvements in both octane and yield can be expected.

According to a further alternative configuration which constitutes a favoured embodiment of the invention, the hydrotreated intermediate product is passed to the octane restoration step of the process in which isomerisation and cracking takes place over a catalyst of acidic functionality and in the presence of a light reformate. The reformate feed thus introduced to the octane restoration step is preferably a low sulfur, aromatics-rich hydrocarbon.

Any conventional reformate, such as reformate from a fixed bed, swing bed or moving bed reformer may be used. The most useful reformate is a light reformate. This is preferably reformate having a narrow boiling range, i.e. a C6 and lighter fraction. This fraction is a complex mixture of hydrocarbons recovered overhead by a dehexanizer column. The composition will vary over a wide range, depending upon a number of factors including the severity of operation in the reformer and reformer feed. Sometimes these streams will have the C5s, C4s and lower hydrocarbons removed in the depentanizer and debutanizer. Therefore, usually, the light reformate will contain at least 80 wt% C6 hydrocarbons, and preferably at least 90 wt% C6 hydrocarbons.

By boiling range, these fractions can be defined by an end boiling point of about 121°C (250°F), and preferably no higher than about 110°C (230°F). Preferably, the boiling range falls between 38 and 100°C (100 and 212°F) and more preferably between the range of 66 to 93°C (150 to 200°F) and even more preferably within the range of 71 to 93°C (160 to 200°F).

These fractions can be low in octane; that is, a benzene and lighter reformate can have a research clear octane number ranging from 80 to 85, more narrowly, 81 to 84, which will be increased by this process. The amount of light reformate which can be fed to the octane restoration unit can vary greatly depending upon the amount of benzene removal and octane boost needed, and the capacity of the reactor and downstream equipment.

A very advantageous source of the feed to the reformer for producing the light reformate can come, at least in part, from the hydrodesulfurisation zone of this process. That is, a heart cut from the naphtha fraction, for example a 195-302°F (90-150°C) fraction, from the hydrodesulfurisation product may be sent to the reformer where the low octane naphthenes which make up a significant portion of this fraction are converted to high octane aromatics. The light cut, C6⁻, is separated from the reformate and sent to the octane restoration step for treatment with the acid catalyst. The hydrotreatment is effective to desulfurise and denitrogenate the catalytically cracked naphtha which permits the heart cut to be processed in the reformer. Thus the preferred configuration in this alternative is for the octane restoration step to process the C6⁻ portion of the desulfurised effluent. This offers appropriate and efficient integration of the refinery processes of reforming with the hydrodesulfurisation and octane restoration of this process. Improvement in both octane and yield can be expected.

The conditions used in the second step of the process are those which result in a controlled degree of shape-selective cracking of the desulfurised, hydrotreated effluent from the first step produces olefins which restore the octane rating of the original, cracked feed at least to a partial degree. The reactions which take place during the second step are mainly the shape-selective cracking of low octane paraffins to form higher octane products, both by the selective cracking of heavy paraffins to lighter paraffins and the cracking of low octane n-paraffins, in both case with the generation of olefins. Some isomerisation of n-paraffins to branched-chain paraffins of higher octane may take place, making a further contribution to the octane of the final product. In favorable cases, the original octane rating of the feed may be completely restored or perhaps even exceeded. Since the volume of the second stage product will typically be comparable to that of the original feed or even exceed it, the number of octane barrels (octane rating x volume) of the final, desulfurised product may exceed the octane barrels of the feed.

The conditions used in the second step are those which are appropriate to produce this controlled degree of cracking. Typically, the temperature of the second step will be about 150 to 480°C (300 to 900°F), preferably about 177 to 427°C (350 to 800°F). As mentioned above, however, a convenient made of operation is to cascade the hydrotreated effluent into the second reaction zone and this will imply that the outlet temperature from the first step will set the initial temperature for the second zone. The feed characteristics and the inlet temperature of the hydrotreating zone, coupled with the conditions used in the first stage will set the first stage exotherm and, therefore, the initial temperature of the second zone. Thus, the process can be operated in a completely integrated manner, as shown below.

The pressure in the second reaction zone is not critical since no hydrogenation is desired at this point in the sequence although a lower pressure in this stage will tend to favour olefin production with a consequent favourable effect on product octane. The pressure will therefore depend mostly on operating convenience and will typically be comparable to that used in the first stage, particularly if cascade operation is used. Thus, the pressure will typically be about 50 to 1500 psig (about 445 to 10445 kPa), preferably about 300 to 1000 psig (about 2170 to 7000 kPa) with comparable space velocities, typically from about 0.5 to 10 LHSV (hr⁻¹), normally about 1 to 6 LHSV (hr⁻¹). Hydrogen to hydrocarbon ratios typically of about 100 to 5000 SCF/Bbl (18 to 890 n.1.1⁻¹.), preferably about 100 to 2500 SCF/Bbl (about 18 to 445 n.1.1⁻¹.) will be selected to minimise catalyst aging.

The use of relatively lower hydrogen pressures thermodynamically favours the increase in volume which occurs in the second step and for this reason, overall lower pressures are preferred if this can be accommodated by the constraints on the aging of the two catalysts. In the cascade mode, the pressure in the second step may be constrained by the requirements of the first but in the two-stage mode the possibility of recompression permits the pressure requirements to be individually selected, affording the potential for optimising conditions in each stage.

According to a particular embodiment of the invention the second reaction zone is operated with hydrogen essentially free of hydrogen sulfide, to eliminate or reduce the poisoning effect of the ammonia and hydrogen sulfide released in the hydrodesulfurisation step. This embodiment may be used in a single reactor or, if desired, may be adapted to a two-reactor configuration but without the necessity of interstage heteroatom removal or of interstage heating.

According to the said embodiment the hydrogen stream which is introduced to the top of the zeolite catalyst bed is essentially free of inorganic nitrogen and sulfur, i.e. ammonia and hydrogen sulfide. This gas stream may be the make-up hydrogen either by itself or combined with some recycle from the scrubber. The effluent gas from the zeolite catalyst bed is directed to the top of the hydrodesulfurisation (HDS) catalyst bed. The effluent gas from the HDS catalyst

bed that contains $H_2S$ and $NH_3$ is purified to remove the inorganic heteroatom contaminants and is then recycled back to the hydrodesulfurisation bed. By contacting the zeolite catalyst with a $H_2S/NH_3$-free hydrogen stream, the improved process also eliminates the potential for combination reactions of $H_2S$ and olefins to form hydrocarbon sulfides. Consequently, it produces very low sulfur hydrofinished FCC gasoline without significant octane loss.

In this configuration, the FCC gasoline or other feed preferably flows downward through the HDS and zeolite catalyst beds or, alternatively, an $H_2S/NH_3$-free stream can be made to flow against the downstream feedstock flow (counter-flow reactor), thus avoiding the contamination of the zeolite bed at the bottom of the reactor. However, the counter-flow reactor is more expensive to operate than the concurrent, down-flow reactor because of the high pressure drop.

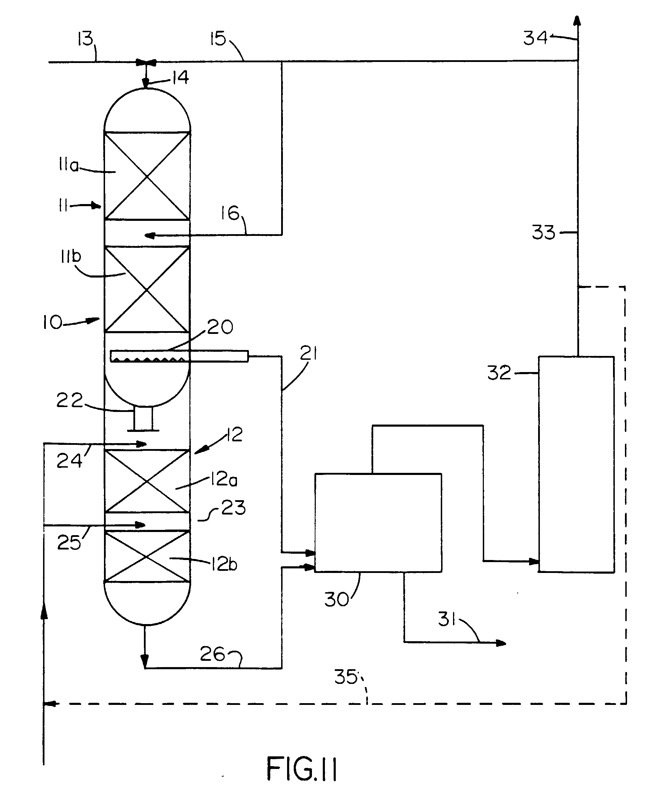

Figure 11 shows a simplified reactor and process flow diagram that will eliminate the $H_2S/NH_3$ poisoning of the zeolite catalyst used in the gasoline upgrading process according to this embodiment. The unit comprises a reactor 10 with two reaction zones 11, 12 to accommodate the two catalysts required by the process. In the figure, there are four catalyst beds in the reactor with the HDS catalyst in beds IIa and IIb and the acidic catalyst, e.g the zeolite, in beds 12a and 12b. The gasoline boiling range feed is introduced through line 13 and inlet 14 with recycle hydrogen coming through line 15. A hydrogen quench injection point 16 is provided at the interbed position for the reactor temperature control; in a multi-bed reactor additional quench points may be provided between the successive beds, as is conventional. A perforated gas collector 20 connected to gas outlet line 21 is inserted beneath the bed of HDS catalyst to remove the hydrogen which is now contaminated with the sulfur and nitrogen removed from the feed in the form of ammonia and hydrogen sulfide. The liquid effluent from the HDS step passes out of the top portion of the reactor through funnel 22 and enters the lower portion 23 of the reactor 10, which contains the zeolite catalyst which restores the octane lost in the HDS reaction.

The liquid effluent is then passed through the lower catalyst bed after passing through a distributor tray (not shown, of conventional type). Make-up hydrogen is injected into the lower portion 23 of the reactor at two points, 24, 25. Since the reactions which take place in this catalyst bed are mainly endothermic, there is no great need for sequential injection but improved gas/liquid contact and mixing may be provided by providing a distributor tray with the hydrogen injection at the inter-bed location as shown. Channeling is also reduced by the use of re-distribution.

The mixed phase effluent from the lower portion of the reactor passes through line 26 to a vapour/liquid separator 30 which also receives the gas removed from the HDS bed through line 21. The hydrogen is separated from the liquid in separator 30 and the liquid gasoline product is recovered through product line 31 (in practice, the separation will take place in sequential separators with the hydrogen and light gases being first separated from the $C5^+$ gasoline fraction with subsequent separation of the recycle hydrogen from the light ends produced in the HDS step). The hydrogen passes to a conventional amine adsorbing unit 32 which removes the ammonia and hydrogen sulfide. The purified gas steam (recycle hydrogen) from the amine unit is used to provide hydrogen for the HDS reaction by recycle through line 33. Some hydrogen may be vented through vent line 34 to maintain adequate hydrogen purity. Some purified hydrogen may be recycled through line 35 and mixed with the make-up hydrogen to provide a low $H_2S/NH_3$ content hydrogen stream for the zeolite catalyst.

The hydrogen supplied to the second catalyst section has a hydrogen sulfide partial pressure of less than about 5 psia (about 35 kPaa) and an ammonia partial pressure of less than about 0.1 psia (700 Paa). Provided these limitations are observed, recycle hydrogen may be added to the make-up steam. By maintaining the partial pressures of the hydrogen sulfide and ammonia at a low level in the second step of the process, catalyst poisoning is eliminated or reduced to acceptable levels, so that the second catalyst is able to carry out the desired reactions which restore the octane lost in the HDS step.

Consistent with the objective of restoring lost octane while retaining overall product volume, the conversion to products boiling below the gasoline boiling range ($C5^-$) during the second stage is held to a minimum. However, because the cracking of the heavier portions of the feed may led to the production of products still within the gasoline range, no conversion to C5- products may take place and, in fact, a net increase in $C5^+$ material may occur during this stage of the process, particularly if the feed includes a significant amount of the higher boiling fractions. It is for this reason that the use of the higher boiling naphthas is favoured, especially the fractions with 95 percent points above about 177°C (350°F) and even more preferably above about 193°C (380°F) or higher, for instance, above about 205°C (400°F). Normally, however, the 95 percent point will not exceed about 270°C (520°F) and usually will be not more than about 260°C (500°F).

The catalyst used in the second step of the process possesses sufficient acidic functionality to bring about the desired cracking reactions to restore the octane lost in the hydrotreating step. The preferred catalysts for this purpose are the intermediate pore size zeolitic behaving catalytic materials exemplified by those acid acting materials having the topology of intermediate pore size aluminosilicate zeolites, exemplified by those which in their aluminosilicate form would have a Constraint Index between about 2 and 12. Reference is here made to US-A-4,784,745 for a definition of Constraint Index and a description of how it is measured, and for disclosure of a substantial number of catalytic materials having the appropriate topology and the pore system structure to be useful in this service.

Suitable intermediate pore size aluminosilicate zeolites include those having the topology of ZSM-5, ZSM-11, ZSM-12, ZSM-21, ZSM-22, ZSM-23, ZSM-35, ZSM-48, ZSM-50 and MCM-22. (Zeolite MCM-22 is described in US-A-4,954,325.) Other catalytic materials having the appropriate acidic functionality may, however, be employed, for example the large pore size zeolite materials, which have a Constraint Index of up to about 2 (in the aluminosilicate form). Zeolites of this type include mordenite, zeolite beta, faujasites such as zeolite Y and ZSM-4.

MCM-22 may be particularly effective for the production of olefins and may therefore be especially suitable for use in a gasoline upgrading process in which the olefins produced in this step of the reaction are separated and passed to an alkylation unit for conversion to alkylate or to an etherification unit for conversion to fuel ethers including tertiary alkyl ethers such as MTBE or TAME. Ring-opening reactions may also take place, leading to the production of further quantities of high octane gasoline boiling range components; MCM-22 produces more branched-chain C4 and C5 materials than ZSM-5, possibly by the ring-opening reactions. Isomerisation of n-paraffins to branched-chain paraffins of higher octane may take place, making a further contribution to the octane of the final product. In favourable cases, the original octane rating of the feed may be completely restored or perhaps even exceeded. Since the volume of the second stage product will typically be comparable to that of the original feed or even exceed it, the number of octane barrels (octane rating x volume) of the final, desulfurised product may exceed the octane barrels of the feed.

MCM-22 is a synthetic porous crystalline material which has a characteristic structure defined by its x-ray diffraction pattern, and is described in US-A-4,962,256 and 4,954,325. It may be defined by reference to its x-ray diffraction patterns, as set out below.

In its calcined form MCM-22 catalyst is characterized by an x-ray diffraction pattern including the lines shown in Table A below:

TABLE A

| Interplanar d-spacing (A) | Relative Intensity, $I/I_o$ x 100 |
|---|---|
| 12.36 ± 0.4 | M-VS |
| 11.03 ± 0.2 | M-S |
| 8.83 ± 0.14 | M-VS |
| 6.18 ± 0.12 | M-VS |
| 6.00 ± 0.10 | W-M |
| 4.06 ± 0.07 | W-S |
| 3.91 ± 0.07 | M-VS |
| 3.42 ± 0.06 | VS |

More specifically, it may be characterized by an x-ray diffraction pattern in its calcined form including the following lines shown in Table B below:

TABLE B

| Interplanar d-spacing (A) | Relative Intensity, $I/I_o$ x 100 |
|---|---|
| 30.0 ± 2.2 | W-M |
| 22.1 ± 1.3 | W |
| 12.36 ± 0.4 | M-VS |
| 11.03 ± 0.2 | M-S |
| 8.83 ± 0.14 | M-VS |
| 6.18 ± 0.12 | M-VS |
| 6.00 ± 0.10 | W-M |
| 4.06 ± 0.07 | W-S |
| 3.91 ± 0.07 | M-VS |
| 3.42 ± 0.07 | VS |

More specifically, the calcined form may be characterised by an x-ray diffraction pattern including the following lines shown in Table C below:

TABLE C

| Interplanar d-spacing (A) | Relative Intensity, $I/I_o$ x 100 |
|---|---|
| 12.36 ± 0.4 | M-VS |
| 11.03 ± 0.2 | M-S |
| 8.83 ± 0.14 | M-VS |
| 6.86 ± 0.14 | W-M |
| 6.18 ± 0.12 | M-VS |
| 6.00 ± 0.10 | W-M |
| 5.54 ± 0.10 | W-M |
| 4.92 ± 0.09 | W |
| 4.64 ± 0.08 | W |
| 4.41 ± 0.08 | W-M |
| 4.25 ± 0.08 | W |
| 4.10 ± 0.07 | W-S |
| 4.06 ± 0.07 | W-S |
| 3.91 ± 0.07 | M-VS |
| 3.75 ± 0.06 | W-M |
| 3.56 ± 0.06 | W-M |
| 3.42 ± 0.06 | VS |
| 3.30 ± 0.05 | W-M |
| 3.20 ± 0.05 | W-M |
| 3.14 ± 0.05 | W-M |
| 3.07 ± 0.05 | W |
| 2.99 ± 0.05 | W |
| 2.82 ± 0.05 | W |
| 2.78 ± 0.05 | W |
| 2.68 ± 0.05 | W |
| 2.59 ± 0.05 | W |

Most specifically, it may be characterized in its calcined form by an x-ray diffraction pattern including the following lines shown in Table D below:

TABLE D

| Interplanar d-spacing (A) | Relative Intensity, $I/I_o$ x 100 |
|---|---|
| 30.0 ± 2.2 | W-M |
| 22.1 ± 1.3 | W |
| 12.36 ± 0.4 | M-VS |
| 11.03 ± 0.2 | M-S |
| 8.83 ± 0.14 | M-VS |
| 6.86 ± 0.14 | W-M |
| 6.18 ± 0.12 | M-VS |
| 6.00 ± 0.10 | W-M |
| 5.54 ± 0.10 | W-M |
| 4.92 ± 0.09 | W |
| 4.64 ± 0.08 | W |
| 4.41 ± 0.08 | W-M |
| 4.25 ± 0.08 | W |
| 4.10 ± 0.07 | W-S |
| 4.06 ± 0.07 | W-S |
| 3.91 ± 0.07 | M-VS |
| 3.75 ± 0.06 | W-M |

TABLE D   (continued)

| Interplanar d-spacing (A) | Relative Intensity, $I/I_o$ x 100 |
| --- | --- |
| 3.56 ± 0.06 | W-M |
| 3.42 ± 0.06 | VS |
| 3.30 ± 0.05 | W-M |
| 3.20 ± 0.05 | W-M |
| 3.14 ± 0.05 | W-M |
| 3.07 ± 0.05 | W |
| 2.99 ± 0.05 | W |
| 2.82 ± 0.05 | W |
| 2.78 ± 0.05 | W |
| 2.68 ± 0.05 | W |
| 2.59 ± 0.05 | W |

The values of the d-spacing and relative intensity are determined by standard techniques, as described in US 4,962,256.

Examples of other porous crystalline materials conforming to these structural types manifesting themselves in the characteristic x-ray diffraction patterns include the PSH-3 composition of US Patent No. 4,439,409, to which reference is made for a description of this material as well as of its preparation.

Zeolite MCM-22 has chemical composition expressed by the molar relationship:

$$X_2O_3:(n)YO_2,$$

where X is a trivalent element, such as aluminum, boron, iron and/or gallium, preferably aluminum, Y is a tetravalent element such as silicon and/or germanium, preferably silicon, and n is at least about 10, usually from about 10 to about 150, more usually from about 10 to about 60, and even more usually from about 20 to about 40. In the as-synthesized form, MCM-22 has a formula, on an anhydrous basis and in terms of moles of oxides per n moles of $YO_2$, as follows:

$$(0.005-0.1)Na_2O:(1-4)R:X_2O_3:nYO_2$$

where R is an organic component. The Na and R components are associated with the zeolite as a result of their presence during crystallisation, and are easily removed by the post-crystallisation methods described in US 4,954,325 and 4,962,256.

MCM-22 is thermally stable and exhibits a high surface area greater than about 400 $m^2$/gm as measured by the BET (Bruenauer, Emmet and Teller) test and unusually large sorption capacity when compared to previously described crystal structures having similar x-ray diffraction patterns. As is evident from the above formula, MCM-22 is synthesised nearly free of Na cations and thus possesses acid catalysis activity as synthesised. It can, therefore, be used as a component of the catalyst without having to first undergo an exchange step. To the extent desired, however, the original sodium cations of the as-synthesized material can be replaced by established techniques including ion exchange with other cations. Preferred replacement cations include metal ions, hydrogen ions, hydrogen precursor ions, e.g. ammonium and mixture of such ions.

In its calcined form, MCM-22 appears to be made up of a single crystal phase with little or no detectable impurity crystal phases and has an x-ray diffraction pattern including the lines listed in above Tables A-D.

Prior to use as the catalyst in the present process, zeolite crystals should be subjected to thermal treatment to remove part or all of any organic constituent present in the as-synthesized material.

The zeolite in its as-synthesised form contains organic cations as well as when it is in its ammonium form, can be converted to another form by thermal treatment. This thermal treatment is generally performed by heating one of these forms at a temperature of at least about 370°C for at least 1 minute and generally not longer than 20 hours. While subatmospheric pressure can be employed for the thermal treatment, atmospheric pressure is preferred simply for reasons of convenience. The thermal treatment can be performed at a temperature of up to a limit imposed by the irreversible thermal degradation of the crystalline structure of the zeolite.

Prior to its use in the process, the zeolite crystals should be dehydrated, at least partially. This can be done by heating the crystals to a temperature in the range of from about 200 to about 595°C in an atmosphere such as air, nitrogen, etc. and at atmospheric, subatmospheric or superatmospheric pressures for between about 30 minutes to about 48 hours. Dehydration can also be performed at room temperature merely by placing the crystalline material in a vacuum, but a longer time is required to obtain a sufficient amount of dehydration.

When zeolite beta is used as catalyst in the second step of the process, ring-opening reactions may take place, leading to the production of further quantities of high octane gasoline boiling range components; zeolite beta is particularly effective for the production of branched-chain C4 and C5 materials, possibly by the ring-opening reactions.

The aluminosilicate form of zeolite beta has been found to provide the requisite degree of acidic functionality and for this reason is the preferred form of the zeolite. The aluminosilicate form of zeolite beta is described in US-A-3,308,069 (Wadlinger). Other isostructural forms of the zeolite containing other metals instead of aluminum, such as gallium, boron or iron, may also be used.

The use of zeolite beta is particularly favourable when the present process is combined with an alkylation unit, because of its potential for the production of branched-chain paraffins and olefins, both of which tend to result in a high quality alkylate. The branched-chain olefins produced in enhanced amounts by zeolite beta catalysts are suitable feeds for the production of alkyl tertiary ethers such as MTBE and TAME, and for this reason the use of the zeolite beta catalysts represents a preferred mode of operation when combined with an etherification unit.

In a further embodiment of the invention the second stage catalyst is a constrained intermediate pore size zeolitic behaving catalytic material, capable of sorbing its intracrystalline voids 10 mg to 40 mg 3-methylpentane at 90°C, 90 torr, per gram dry zeolite in the hydrogen form. Such zeolites, exemplified by ZSM-22, ZSM-23 and ZSM-35, are members of a unique class of zeolites. They have channels described by 10-membered rings of T (=Si or Al) or oxygen atoms, i.e., they are intermediate pore zeolites, distinct from small pore 8-ring or large pore 12-ring zeolites. They differ, however, from other intermediate pore 10-ring zeolites, such as ZSM-5, ZSM-11, ZSM-57 or stilbite, in having a smaller 10-ring channel. If the crystal structure (and hence pore system) is known, a convenient measure of the channel cross-section is given by the product of the dimensions (in Angstrom units) of the two major axes of the pores. These dimensions are listed in the "Atlas of Zeolite Structure Types" by W. M. Meier and D. H. Olson, Butterwortbs, publisher, Second Edition, 1987. The values of this product, termed the Pore Size Index, are listed below in Table E.

TABLE E

| Pore Size Index | | | | |
|---|---|---|---|---|
| Type | Largest Ring Size | Zeolite | Axes of Largest Channel, A | Pore Size Index |
| 1 | 8 | Chabazite | 3.8 x 3.8 | 14.4 |
| | | Erionite | 3.6 x 5.1 | 18.4 |
| | | Linde A | 4.1 x 4.1 | 16.8 |
| 2 | 10 | ZSM-22 | 4.4 x 5.5 | 24.2 |
| | | ZSM-23 | 4.5 x 5.2 | 23.4 |
| | | ZSM-35 | 4.2 x 5.4 | 22.7 |
| | | ALPO-11 | 3.9 x 6.3 | 24.6 |
| 3 | 10 | ZSM-5 | 5.3 x 5.6 | 29.1 |
| | | ZSM-11 | 5.3 x 5.6 | 28.6 |
| | | Stilbite | 4.9 x 6.1 | 29.9 |
| | | ZSM-57 (10) | 5.1 x 5.8 | 29.6 |
| 4 | 12 | ZSM-12 | 5.5 x 5.9 | 32.4 |
| | | Mordenite | 6.5 x 7.0 | 45.5 |
| | | Beta (C-56) | 6.2 x 7.7 | 47.7 |
| | | Linde-L | 7.1 x 7.1 | 50.4 |
| | | Mazzite (ZSM-4) | 7.4 x 7.4 | 54.8 |
| | | $ALPO_4$-5 | 7.3 x 7.3 | 53.3 |

It can been seen that small pore, eight-ring zeolites have a Pore Size Index below about 20, the intermediate pore, 10-ring zeolites of about 20-31, and large pore, 12-ring zeolite above about 31. It is also apparent that the 10-ring zeolites are grouped in two distinct classes; Type 2 with a Pore Size Index between about 22.7 and 24.6, and more broadly between about 20 and 26, and Type 3 with a Pore Size Index between 28.6 and 29.9, or more broadly, between about 28 and 31.

The zeolites which are suited for this invention are those of Type 2 with a Pore Size Index of 20-26.

The Type 2 zeolites are distinguished from the other types by their sorption characteristics towards 3-methylpentane. Representative equilibrium sorption data and experimental conditions are listed in Table F.

Type 2 zeolites sorb in their intracrystalline voids at least about 10 mg and no greater than about 40 mg of 3-methylpentane at 90°C, 90 torr 3-methylpentane, per gram dry zeolite in the hydrogen form. In contrast, Type 3 zeolites sorb greater than 40 mg 3-methylpentane under the conditions specified.

The equilibrium sorption data are obtained most conveniently in a thermogravimetric balance by passing a stream of inert gas such as helium containing the hydrocarbon with the indicated partial pressure over the dried zeolite sample held at 90°C for a time sufficient to obtain a constant weight.

Samples containing cations such as sodium or aluminum ions can be converted to the hydrogen form by well-known methods such as exchange at temperatures between 25 and 100°C with dilute mineral acids, or with hot ammonium chloride solutions followed by calcination. For mixtures of zeolites with amorphous material or for poorly crystallized samples, the sorption values apply only to the crystalline portion.

TABLE F

| Equilibrium Sorption Data of Medium Pore Zeolites | | |
|---|---|---|
| Type | Zeolite | Amount sorbed, mg per g zeolite 3-Methylpentane [a] |
| 2 | ZSM-22 | 20 |
|  | ZSM-23 | 25 |
|  | ZSM-35 | 25 |
| 3 | ZSM-5 | 61 |
|  | ZSM-12 | 58 |
|  | ZSM-57 | 70 |
|  | MCM-22 | 79 |

[a] at 90°C, torr 3-methylpentane

ZSM-22 is more particularly described in US-A-4,556,477, and its preparation in microcrystalline form using ethylpyridinium as directing agent in US-A-4,481,177. For purposes of the present invention, ZSM-22 is considered to include its isotypes, e.g., Theta-1, Gallo-Theta-1, NU-10, ISI-1 and KZ-2.

ZSM-23 is more particularly described in US-A-4,076,842, and is considered to include its isotypes, e.g. EU-13, ISI-4 and KZ-1.

ZSM-35 is more particularly described in US-A-4,016,245. Isotypes of ZSM-35 include ferrierite (P.A. Vaughan, Acta Cryst. 21, 983 (1966); FU-9 (D, Seddon and T. V. Whittam, European Patent B-55,529, 1985); ISI-6 (N. Morimote, K. Takatsu and M. Sugimoto, US Patent 4,578,259, 1986); monoclinic ferrierite (R. Gramlich-Meier, V. Gramlich and W.M. Meier, Am. Mineral. 70, 619 (1985); NU-23 (T. V. Whittam, European Patent A-130,981, 1984); and Sr-D (R. M. Barrer and D. J. Marshall, J. Chem. Soc. 1964, 2296 (1964)). An example of a piperidine-derived ferrierite is more particularly described in US-A-4,343,692, and other synthetic ferrierite preparations are described in US-A-3,933,974; 3,966,883; 4,000,248; 4,017,590 and 4,251,499. Further descriptions of ferrierite are found in Bibby et al, "Composition and Catalytic Properties of Synthetic Ferrierite", Journal of Catalysis, 35, pages 256-272 (1974).

The zeolite is preferably used at least partly in the hydrogen form, e.g. HZSM-22, HZSM-23 or HZSM-35. Other metals or cations thereof, e.g. rare earth cations, may also be present. When the zeolites are prepared in the presence of organic cations, they may be quite inactive possibly because the intracrystalline free space is occupied by the organic cations from the forming solution. The zeolite may be activated by heating in an inert or oxidative atmosphere to remove the organic cations, e.g. by heating at over 500°C for 1 hour or more. Other cations, e.g. metal cations, can be introduced by conventional base exchange or impregnation techniques.

In a further embodiment the catalyst used in the second stage of the process has the structure of ZSM-12, either alone or in combination with one or more other acidic catalyst materials. ZSM-12 exhibits a Constraint Index value of 2.3 at 316°C determined by the method described in US-A-4,016,218. The structure of ZSM-12 is indicated in Zeolites, vol, 5, p. 346 (1985), incorporated herein by reference in its entirety.

Other acidic catalyst materials useful for combination with ZSM-12 include, as non-limiting examples, those having the structures of ZSM-5, ZSM-11, ZSM-23, ZSM-35, ZSM-48, ZSM-50, and the synthetic porous crystalline materials characterized in US-A-4,962,256.

The use of ZSM-12 is particularly favourable when the present process is combined with an alkylation unit because of its potential for the production of branched-chain paraffins and olefins, both of which tend to result in a high quality alkylate. The branched-chain olefins are suitable feeds for the production of alkyl tertiary ethers such as MTBE and TAME and for this reason the use of the ZSM-12 catalysts represents a preferred mode of operation when combined with an etherification unit. Further, catalyst for the second stage of this process comprising crystals having the structure of ZSM-12 is more active for 420°F+ (215°C+) conversion than the same catalyst with ZSM-5, but slightly less effective for octane enhancement than the ZSM-5 catalyst. The ZSM-12 catalyst provides a higher combined yield of isobutanes and isopentanes, mostly isobutanes.

According to yet a further embodiment, the second stage catalyst system comprises a combination of an intermediate pore size zeolite and a large pore size zeolite. The intermediate pore size zeolite has a Constraint Index ranging from about 2 to 12, preferably about 8 to 10, more specifically about 8.3. The large pore size zeolite has a Constraint Index of up to about 2, ranging from about 0.4 to 1, more specifically 0.6. The preferred intermediate pore size zeolite contemplated has the topology of ZSM-5. Nevertheless the use of the other intermediate pore zeolites referred to herein is contemplated, as the particular circumstances dictate.

The following Table sets for the the Constraint Index (CI) Values for some large pore zeolites:

| Zeolite | CI |
| --- | --- |
| Beta | 0.6 |
| ZSM-4 | 0.5 |
| H-Zeolon | 0.5 |
| Acid Mordenite | 0.5 |
| REY | 0.4 |
| Amorphous Silica-Alumina | 0.6 |

The large pore materials are sometimes identified by reference to a pore size larger than about 7 Angstrom units, even greater than 8 Angstrom units, and their ability to admit and act upon substantially all the components found in cracking feedstocks, including very bulky, highly branched and aromatic larger molecules. Zeolites of this type include mordenite, zeolite beta, ZSM-20, faujasites such as zeolite Y, USY or REY, and ZSM-4. Reference is made to US-E-28,341 for a description of zeolite beta, US-A-3,972,983 for a description of ZSM-20 and US-A-3,578,723 for a description of ZSM-4. Representative examples of other large pore materials which can be combined with ZSM-5 to produce satisfactory results include the synthetic faujasite X, zeolite L and naturally occurring zeolites such as chabazite, faujasite, mordenite and the like.

A particularly favoured large pore zeolite is zeolite beta, which may take the form of a crystalline aluminosilicate having a pore size greater than 5 Angstrom units. The composition of the zeolite in its as-synthesised form may be expressed as follows:

$$[XNa(1.0\pm0.1-X)TEA]AlO_2.YSiO_2.WH_2O$$

where X is less than 1, preferably less than 0.7; TEA represents the tetraethylammonium ion; Y is greater than 5 but less than 100; and W is up to about 60 (it has been found that the degree of hydration may be higher than originally determined where W was defined as being up to 4) depending on the degree of hydration and the metal cation present. The TEA component is calculated by differences from the analysed value of sodium and the theoretical cation to structural aluminum ratio of unity.

The preferred forms of zeolite beta for use in the present process are the high silica forms, having silica-to-alumina mole ratios of at least 10:1, and preferably in the range of 20:1 to 50:1, and even higher, in the as-synthesised form. It has been found that zeolite beta may be prepared and synthesised with silica-to-alumina mole ratios greater than 50:1, more specifically greater than 200:1, and even higher as described in US Patent Application Serial No. 715,190 filed on June 14, 1991 and Serial No. 715,270 filed on June 14, 1991. The silica-to-alumina mole ratio of the zeolite in its as-synthesised form may be increased by techniques such as steaming and other dealumination methods, and a certain measure of dealumination will take place during use under the influence of the hydrothermal conditions encountered during use.

The silica-to-alumina mole ratios referred to are the structural or framework ratios; that is, the ratio of the $SiO_2$ to the $AlO_4$ tetrahedra, which together constitute the structure of which the zeolite is composed. This ratio may vary from the silica-to-alumina ratio determined by various physical and chemical methods. For example, a gross chemical analysis may include aluminum which is present in the form of cations associated with the acidic sites on the zeolite, thereby giving a low-silica-to-alumina ratio. Similarly, if the ratio is determined by the thermogravimetric analysis (TGA) of ammonia desorption, a low ammonia titration may be obtained if cationic aluminum prevents exchange of the ammonium ions onto the acidic sites. These disparities are particularly troublesome when certain treatments, such as the dealumination method described below which result in the presence of ionic aluminum free of the zeolite structure, are employed. Due care should therefore be taken to ensure that the framework silica-to-alumina ratio is correctly determined.

For silica-to-alumina mole ratios above the as-synthesised values described above, post-synthesis methods of treating the zeolite are usually necessary. One such method comprises dealumination by extraction with acid, particularly a mineral acid or an organic acid.

When it is used in the present catalysts, the zeolite is at least partly in the hydrogen form in order to provide the desired acidic functionality for the cracking reactions which are to take place. As stated above, the zeolite's acidic functionality can be characterised by the alpha value. The acidic functionality may be controlled by base exchange of the zeolite, especially with alkali metal cations, such as sodium, by steaming or by control of the silica-to-alumina mole ratio of the zeolite.

Zeolite beta in addition to possessing a composition as defined above may also be characterised by its x-ray diffraction data which are set forth in US-E-28,341.

When synthesised in the alkali metal form, zeolite beta may be converted to the hydrogen form, by formation of the intermediate ammonium form, as a result of ammonium ion-exchange and calcination of the ammonium form to yield the hydrogen form. In addition to the hydrogen form, other forms of the zeolite in which the original alkali metal content has been reduced may be used. Thus, the original alkali metal of the zeolite may be replaced by ion-exchange with the other suitable metal cations, including, by way of example, copper, zinc, calcium or rare earth metals.

The intermediate and large pore zeolites are combined in the catalyst in amounts which may vary depending upon the preferred product composition. The intermediate pore (e.g. ZSM-5) component facilitates production of high octane products while the large pore (e.g zeolite beta) component adds an increase in conversion of the higher boiling components. Thus, it is appropriate to vary the amount of each zeolite depending upon the preferred product composition; that is, if greater conversion is needed (a higher boiling point feed and lower cut point gasoline specifications), a higher proportion of large-pore zeolite should be used. Thus, the proportion of each zeolite can be present in the catalyst in about equal amounts in order to achieve a balance in the product properties. Or, in different circumstances, the intermediate pore zeolite may constitute less than 50% of the mixture, and even be present in "additive" quantity.

A particular, preferred catalyst system contains a ratio of zeolite having the topology of zeolite beta to zeolite having the topology of ZSM-5 ranging from about 0.1:1 to 10:1, more specifically ranging from about 0.5:1 to 5:1.

Preferred catalysts include HZSM-5 or ZSM-5/$Al_2O_3$ (65/35 wt%), H-zeolite beta/$Al_2O_3$ (65/35 wt%), and REY/clay matrix.

As well as the aforesaid combination of intermediate and large pore zeolites there may also be used as catalyst in the second step of the process combinations of two or more intermediate pore zeolites.

Particularly favoured combinations of the specific intermediate pore zeolites hereinabove disclosed include those in which one of the zeolites in the combination is MCM-22; and those in which one of the zeolites in the combination is a zeolite capable of sorbing 10 to 40 mg of 3-methylpentane at 90°C, 90 torr, per gram of hydrogen-form zeolite.

By zeolite MCM-22 is meant the zeolite described hereinabove in relation to the x-ray data set forth in Tables A to D. The zeolite having the defined capacity for sorption of 3-methylpentane is, as also described above, exemplified by the zeolites designated ZSM-22, ZSM-23 and ZSM-35, all as hereinbefore defined.

The other intermediate pore zeolite with which each of the aforesaid zeolites is combined to constitute the second step catalyst is advantageously zeolite ZSM-5.

The mixed-zeolite catalyst may be made up in any desired physical form, in the manner described hereinabove in relation to intermediate pore/large pore combinations of zeolites. The proportioning of the two zeolites will, similarly, be determined by the extent to which it is desired that the particular catalytic properties of one of the zeolites preponderate.

Thus in the case of a ZSM-5/MCM-22 combination of zeolites, the ZSM-5 component facilitates production of high octane products while the MCM-22 component adds increased conversion of the higher boiling components and conversion to materials suitable as feed to alkylation or for making oxygenates such as MTBE and TAME. In the case of ZSM-5/ZSM-22, -23 or -35 combination of zeolites, the constrained-intermediate pore component has the ability to increase octane without increasing olefin make (e.g by causing production of dicycloparaffins, alkyl benzenes, indanes, tetralins and naphthalins) and is proportioned accordingly in relation to the ZSM-5 component.

According to a variant of the above-described embodiment in which the second stage catalyst comprises a large pore and an intermediate pore zeolite, the second step of the process comprises a first catalyst zone and a second catalyst zone, both being of sufficient acidic functionality to bring about the desired cracking reactions to restore the octane lost in the hydrotreating step.

The configuration of these catalyst zones is such that the effluent of the hydrodesulfurisation step first contacts the large pore size zeolite in the first zone and then contacts the intermediate pore size zeolite in the second zone, so that the n-paraffins and bulkier components of the effluent which are admitted by the less selective larger pore material are treated first. Thus, the catalyst of the first catalyst zone is comprised of a zeolite component of sufficient pore size to bring about the desired paraffin isomerisation and back end conversion reactions. Thereafter, the cracked components are passed over the second catalyst zone which comprises an intermediate pore material for better yield and octane gain. Thus, the second catalyst zone of this second step can be a separate reactor, with or without interstage separation of the light ends, or there can be a catalyst bed comprised of separate catalyst layers such as a fixed-bed reactor in which the catalyst containing the large pore zeolite material is loaded directly on top of the catalyst containing the intermediate pore material.

No matter which zeolite or combination of zeolites is employed as second-stage catalyst, non-selective reactions on the surface acid sites of the zeolites are undesirable, in order to maximise gasoline selectivity and minimise transalkylation and polyalkylation. These non-selective reactions on the zeolite surface are not subject to the normal shape selective constraints imposed on those reactions occurring within the zeolite interior. According to a further embodiment of the invention, the surface activity is limited so as to inhibit such non-selective reactions.

Thus, even with the preferred catalysts some heavy aromatics will be formed. Reducing the external acidity gives more products in the desired gasoline range and fewer heavy aromatics, such as trimethylbenzenes and tetramethylbenzenes (e.g. durene). Durene and other polyalkylation products are undesirable because of their high melting points. A reduction in external acidity is also effective for control of the product end point. Modifying the zeolite catalyst to reduce surface acid sites without affecting overall activity can be accomplished by extraction with bulky reagents or by surface poisoning.

The modification of zeolites by exchange and similar technology with large cations such as $N^+$ and $P^+$ and large branched compounds such as polyamines and the like is described in US-A-4,101,595. Bulky phenolic and silicating zeolite surface modifying agents are described in US-A-4,100,215 and 4,002,697, respectively. The surface acidity of the zeolite can be eliminated or reduced by treatment with bulky dialkylamine reagents as described in US-A-4,520,221 and 4,568,786. US-A-4,716,135 discloses that zeolite catalysts can be surface inactivated by cofeeding a sterically hindered base organophosphorus compound; US-A-5,080,878 discloses modifying a crystalline aluminosilicate with a fluorosilicate salt to extract surface zeolite aluminum which is replaced by silicon; US-A-5,043,307 discloses modifying a crystalline aluminosilicate zeolite by steaming as-synthesised zeolite containing organic template material and then contacting the zeolite in the ammonium, alkali metal, or hydrogen form with a dealuminising agent which forms a water soluble complex with aluminum. Any of these techniques may, according to the invention, be employed.

Alternatively, the zeolites may be subjected to selective surface dealumination by contacting with dicarboxylic acid to reduce the external acidity without a significant reduction in overall activity. The preferred intermediate pore size aluminosilicate zeolites having a Constraint Index between about 2 and 12 and the large pore size zeolite materials having a Constraint Index greater than 1 are contacted with dicarboxylic acid for a sufficient time to effect at least about 40% reduction in surface acidity without substantially reducing the Alpha Value.

When the large pore size zeolite materials have a Constraint Index less than 1, it is preferred that the zeolite contain organic species prior to contacting with dicarboxylic acid. The presence of the organic within the zeolite pores facilitates surface selective dealumination because it precludes the acid from entering the pores. Preferably, the zeolite contains at least about 5 wt%, and more preferably at least about 10 wt%, of an organic material that can be decomposed or desorbed at temperatures in the range of about 371 to 538°C (about 700 to about 1000°F).

The large pore size zeolite materials may contain organic directing agents as the organic species. Suitable organic directing agents include n-propylamine cations, n-butylamine cations, n-ethylamine cations, tetraethylammonium cations, tetrapropylammonium cations, pyridine, alkyl substituted pyridines and organic phosphites.

Lok et al, (Zeolites, 3, 282-291 (1983)) teach numerous organic compounds which act as directing agents in zeolite synthesis including tetramethylammonium cation and other quaternary ammonium ions, organic amines and other organic molecules, such as alcohols, ketones, morpholine, glycerol and organic sulfur is also disclosed.

Zeolites synthesised in the absence of an organic directing agent, such as faujasite, can also be modified after thermal treatment by introducing organic species into the pores of the zeolite. These organic molecules include cyclohexane, hexane and n-propylamine cations, n-butylamine cations, n-ethylamine cations, tetraethylammonium cations, tetrapropylammonium cations, pyridine, alkyl substituted pyridines and organic phosphites. Other molecules that can occupy the internal pores of the zeolite can also be used. The presence of the organic species within the pores of the zeolite promotes surface dealumination. The organic species can be introduced by sorption, exchange or impregnation.

Suitable dicarboxylic acids for use in the selective surface dealumination include oxalic, malonic, succinic, glutaric, adipic, maleic, phthalic, isophthalic, terephthalic, fumaric, tartaric or mixtures thereof. Oxalic acid is preferred. The dicarboxylic acid may be used in solution, such as an aqueous dicarboxylic acid in solution.

Generally the acid solution has a concentration in the range from about 0.01 to about 4 M. Preferably, the acid solution concentration is in the range from about 1 to about 3 M. The dicarboxylic acid is generally in a volume solution to volume catalyst ratio of at least about 1:1, preferably at least about 4:1. Treatment time with the dicarboxylic acid solution is as long as required to provide the desired dealumination. Generally the treatment time is at least about 10 minutes. Preferably, the treatment is at least about 1 hour. The treatment temperature is generally in the range from about 32°F (about 0°C) to about reflux. Preferably the treatment temperature is from about 60°F to about 200°F (about 15 to about 94°C), and more preferably from about 120 to about 180°F (about 48 to about 82°C).

More than one dicarboxylic acid treatment stage may be employed for enhanced selective surface dealumination. The dicarboxylic acid treatment may also be combined with other conventional dealumination techniques, such as steaming and chemical treatment.

The dicarboxylic acid selectively dealuminates the surface acid sites of the zeolites used in this stage. The presence of surface acid sites, or surface acidity, is determined by the dealkylation of tri-tertbutylbenzene (TTBB), a bulky molecule that can only react with the acid sites on the zeolite crystal surface.

Dealkylation of TTBB is a facile, reproducible method for measuring surface acidity of catalysts. External surface activity can be measured exclusive of internal activity for zeolites with pore diameters up to and including faujasite. As a test reaction dealkylation of TTBB occurs at a constant temperature in the range of from about 25 to about 300°C, and preferably in the range of from about 200 to about 260°C.

The experimental conditions for the test used herein include a temperature of 200°C and atmospheric pressure. The dealkylation of TTBB is carried out in a glass reactor (18 cm x 1 cm OD) containing an 8 gm 14/30 mesh Vycor chip preheater followed by 0.1 gm catalyst powder mixed with Vycor chips. The reactor is heated to 200°C in 30 cc/gm nitrogen for 30 minutes to remove impurities from the catalyst sample. Ten gm/hr of TTBB dissolved in toluene (7% TTBB) is injected into the reactor. The feed vapourises as it passes through the preheater and is vapour when passing over the catalyst sample. After equilibrium is reached the nitrogen is switched to 20 cc/min hydrogen. The test is then run for about 30 minutes with the reaction products collected in a cold trap.

The reaction products are analysed by gas chromatograph. The major dealkylation product is di-t-butylbenzene (DTBB). Further dealkylation to t-butylbenzene (TBB) and benzene (B) occurs but to a lesser extent.

Conversion of TTBB is calculated on a molar carbon basis. Dealkylation product weight % are each multiplied by the appropriate carbon number ratio to convert to the equivalent amount of TTBB, i.e. DTBB x 18/14, TBB x 18/10 and B x 18/6. These values are then used in the following conversion equation where asterisks indicate adjustment to the equivalence.

$$\% \text{ Conversion} = \frac{DTBB^* + TBB^* + B^*}{TTBB + DTBB^* + TBB^* + B^*}$$

In addition, thermal background experiments using reactors filled with Vycor chips only show no TTBB conversion due to Vycor chips or other reactor components.

In a further embodiment a first order rate constant may be calculated using the following equation:

$$k_1 = \frac{\text{Catalyst Density (g/cc) x Gas Flow (cc/min)}}{60 \text{ sec/min x Catalyst Weight (g)}} \, n \, (1\text{-}\varepsilon)$$

where catalyst density is the bulk density and $\varepsilon$ is the fractional conversion at 60 minutes time on stream. For bound catalysts, the catalyst weight is the weight of the zeolite component.

The dicarboxylic acid treatment results in less than about 50% overall dealumination, preferably less than about 20% overall dealumination, and more preferably less than 10% overall dealumination with greater than about 25% reduction in surface acidity, preferably greater than about 40% reduction in surface acidity, more preferably greater than about 50% reduction in surface acidity, and even more preferably greater than about 60% reduction in surface acidity.

These materials are exemplary of the topology and pore structure of suitable acid-acting refractory solids. Useful catalysts are not confined to the aluminosilicates, and other refractory solid materials which have the desired acid activity, pore structure and topology may also be used. The zeolite designations referred to above, for example, define topology only and do not restrict the compositions of the zeolitic-behaving catalytic components.

The catalyst should have sufficient acid activity to have cracking activity with respect to the second stage feed (the intermediate fraction), that is sufficient to convert the appropriate portion of this material as feed. One measure of the acid activity of a catalyst is its alpha number. This is a measure of the ability of the catalyst to crack normal hexane under prescribed conditions. This test has been widely published and is conventionally used in the petroleum cracking art, and compares the cracking activity of a catalyst under study with the cracking activity, under the same operating and feed conditions, of an amorphous silica-alumina catalyst, which as been arbitrarily designated to have a alpha activity of 1. The alpha value is an approximate indication of the catalytic cracking activity of the catalyst compared to a standard catalyst. The alpha test gives the relative rate constant (rate of normal hexane conversion per volume of catalyst per unit time) of the test catalyst relative to the standard catalyst which is taken as an alpha of 1 (Rate Constant = 0.016 sc$^{-1}$). The alpha test is described in US Patent 3,354,078 and in J. Catalysis, 4, 527 (1965); 6, 278 (1966); and 61, 395 (1980), to which reference is made for a description of the test. The experimental conditions of the test used to determine that alpha values referred to in this specification include a constant temperature of 538°C and a variable flow rate as described in detail in J. Catalysts, 61, 395 (1980).

The catalyst used in the second step of the process suitably has an alpha activity of at least about 20, usually in the range of 20 to 800 and preferably at least about 50 to 200. It is inappropriate for this catalyst to have too high an acid activity because it is desirable to only crack and rearrange so much of the intermediate product as is necessary to restore lost octane without severely reducing the volume of the gasoline boiling range product.

The active component of the catalyst e.g. the zeolite will usually be used in combination with a binder or substrate because the particle sizes of the pure zeolitic behaving materials are too small and lead to an excessive pressure drop in a catalyst bed. This binder or substrate, which is preferably used in this service, is suitably any refractory binder material. Examples of these materials are well known and typically include silica, silica-alumina, silica-zirconia, silica-titatia, alumina.

The catalyst used in this step of the process may contain a metal hydrogenation function for improving catalyst aging or regenerability; on the other hand, depending on the feed characteristic, process configuration (cascade or two-stage) and operating parameters, the presence of a metal hydrogenation function may be undesirable because it may tend to promote saturation of olefinics produced in the cracking reactions as well as possibly bringing about recombination of inorganic sulfur. If found to be desirable under the actual conditions used with particular feeds, metals such as the Group VIII base metals or combinations will normally be found suitable, for example nickel. Noble metals such as platinum or palladium will normally offer no advantage over nickel. A nickel content of about 0.5 to about 5 weight percent is suitable.

The particle size and the nature of the second conversion catalyst will usually be determined by the type of conversion process which is being carried out, such as: a down-flow, liquid phase, fixed bed process; an up-flow, fixed bed, liquid phase process; an ebulating, fixed fluidised bed liquid or gas phase process; or a liquid or gas phase, transport, fluidised bed process, as noted above, with the fixed-bed type of operation preferred.

The conditions of operation and the catalysts should be selected, together with appropriate feed characteristics, to result in a product slate in which the gasoline product octane is not substantially lower than the octane of the feed gasoline boiling range material; that is not lower by more than about 1 to 3 octane numbers. It is preferred also that the volumetric yield of the product is not substantially diminished relative to the feed. In some cases the volumetric yield and/or octane of the gasoline boiling range product may well be higher than those of the feed, as noted above and in favourable cases the octane barrels (that is the octane number of the product times the volume of the product) of the product will be higher than the octane barrels of the feed.

The operating conditions in the first and second steps may be the same or different but the exotherm from the hydrotreatment step will normally result in a higher initial temperature for the second step. Where there are distinct first and second conversion zones, whether in cascade operation or otherwise, it is often desirable to operate the two zones under different conditions. Thus the second zone may be operated at higher temperature and lower pressure than the first zone in order to maximise the octane increase obtained in this zone.

Further increases in the volumetric yield of the gasoline boiling range fraction of the product, and possibly also of the octane number (particularly the motor octane number), may be obtained by using the C3-C4 portion of the product as feed for an alkylation process to produce alkylate of high octane number. The light ends from the second step of the process are particularly suitable for this purpose since they are more olefinic than the comparable but saturated fraction from the hydrotreating step. Alternatively, the olefinic light ends from the second step may be used as feed to an etherification process to produce ethers such as MTBE or TAME for use a oxygenate fuel components. Depending on the composition of the light ends, especially the paraffin/olefin ratio, alkylation may be carried out with additional alkylation feed, suitably with isobutane which has been made in this or a catalytic cracking process or which is imported from other operations, to convert at least some and preferably a substantial proportion to a high octane alkylate in the gasoline boiling range, to increase both the octane and the volumetric yield of the total gasoline product.

According, therefore, to a further embodiment of the invention, olefins and isoparaffins produced in the second reaction zone and which boil below gasoline are reacted over an alkylation catalyst to form gasoline-boiling-range alkylate. Thus, during the second step of the process, the controlled shape-selective cracking of the hydrotreated, cracked naphtha converts some of the feed to components boiling below the gasoline boiling range, principally to C3-C5 olefins and C4-C5 paraffins (C5 materials are mentioned here although some may be included in the finished gasoline depending on product specification, mainly the permitted RVP). When zeolite beta and zeolite MCM-22 are used as the second stage catalyst, the proportion of branched chain paraffins is notably higher than when ZSM-5 is used, although ZSM-5 produces more olefins in the C3-C5 range than these other zeolites. Zeolite beta and MCM-22 also differ from ZSM-5 in giving a greater back-end conversion, a factor which is useful in controlling the end point of the cracked gasoline product.

The production of branched-chain paraffins and lower olefins during the second stage of the process leads to the integration of the process with an alkylation process to convert the lower boiling by-products to high octane gasoline components by alkylation: the iso-paraffins may be separated from the olefins and other cracking products and then fed to an alkylation process to produce high octane branched chain materials for blending into the gasoline pool.

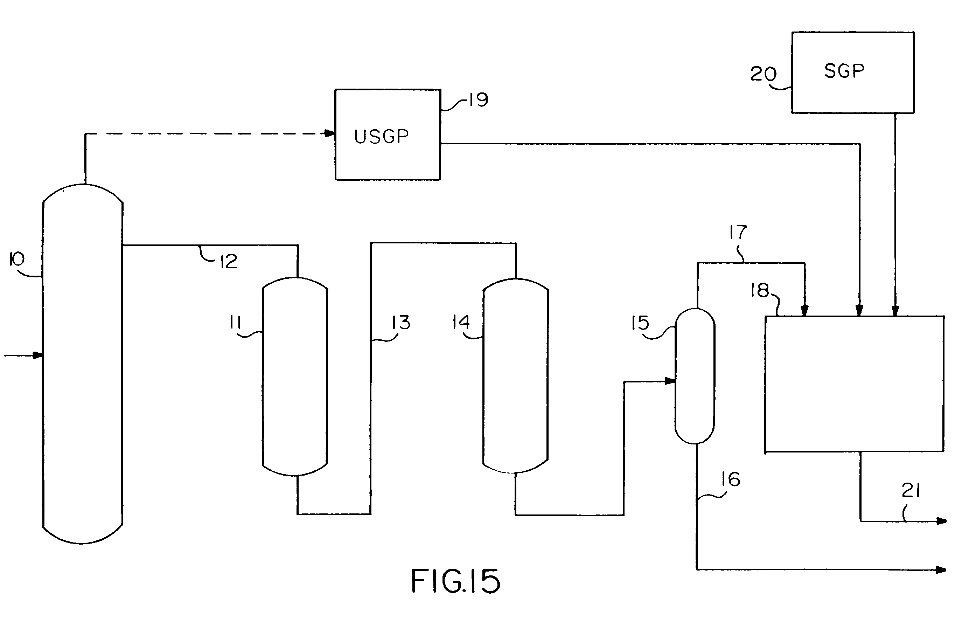

Figure 15 shows a much simplified process schematic diagram of such an integrated process. The catalytically cracked naphtha from the FCC main column 10 is first hydrotreated in hydrotreater 11 which it enters through inlet 12. From hydrotreater 11, the desulfurised naphtha passes through line 13 to the second reactor 14 in which it is contacted with ZSM-5 of another acidic catalyst, for example, zeolite beta or MCM-22. In this reactor a controlled degree of cracking takes place with no significant hydrogen consumption (hydrogen consumption below 17.8 $m^3/m^3$ - 100 SCF/Bbl) to restore the octane loss which takes place in the hydrotreater as a result of olefin saturation. The effluent from reactor 14 then passes to product separator 15 in which the components of the product which boil below the desired gasoline range (set by product specification, mainly RVP limits) are separated from the gasoline product which is sent to the gasoline pool through line 16 where it is blended with other gasoline components such as alkylate, reformate and straight run naphtha.

The product fraction which boils below the gasoline range is sent through line 17 to the refinery alkylation unit 18 which is fed with olefins from the unsaturated gas plant 19 and with iso-butane from the saturated gas plant 20. In the alkylation unit the light paraffins and olefins from reactor 14 are used as incremental alkylation feed to produce additional quantities of alkylate. Because the products from reactor 14 contain more iso-paraffins than olefins, this cracked product stream is treated as an iso-paraffin stream for use in the alkylation unit, the relatively smaller contribution of the olefins being ignored. The alkylate from alkylation unit 18 is passed to the refinery gasoline pool for blending with the other gasoline components through line 21.

In one example of the operation of this process, it is reasonable to expect that, with a heavy cracked naphtha feed, the first stage hydrodesulfurisation will reduce the octane number by at least 1.5%, more normally at least about 3%. With a full range naphtha feed, it is reasonable to expect that the hydrodesulfurisation operation will reduce the octane number of the gasoline boiling range fraction of the first intermediate product by at least about 5% and, if the sulfur content is high in the feed, that this octane reduction could go as high as about 15%.

The second stage of the process should be operated under a combination of conditions such that at least about half (1/2) of the octane lost in the first stage operation will be recovered, preferably such that all of the lost octane will be recovered, most preferably that the second stage will be operated such that there is a net gain of at least about 1% in octane over that of the feed, which is about equivalent to a gain of at least about 5% based on the octane of the hydrotreated intermediate.

The process should normally be operated under a combination of conditions such that the desulfurisation should be at least about 50%, preferably at least about 75%, as compared to the sulfur content of the feed.

EXAMPLES

The following examples illustrate various embodiments of the invention. In them, parts and percentages are by weight, temperatures are in °F and pressures in psig, unless expressly stated to be on some other basis.

In the examples, unless it is indicated that there was some other feed, the same heavy cracked naphtha, containing 2% sulfur, was subjected to processing as set forth below under conditions required to allow a maximum of only 300 ppmw sulfur in the final gasoline boiling range product. The properties of this naphtha feed are set out in Table 1 below.

TABLE 1

| Heavy FCC Naphtha | |
| --- | --- |
| Gravity, °API | 23.5 |
| Hydrogen, wt% | 10.23 |
| Sulfur, wt% | 2.0 |
| Nitrogen, ppmw | 190 |
| Clear Research Octane, R+O | 95.6 |
| Composition, wt% | |
| Paraffins | 12.9 |
| Cyclo Paraffins | 8.1 |
| Olefins and Diolefins | 5.8 |
| Aromatics | 73.2 |

TABLE 1   (continued)

| Heavy FCC Naphtha | |
| --- | --- |
| Distillation, ASTM D-2887 | °F/°C |
| 5% | 289/143 |
| 10% | 355/207 |
| 30% | 405/224 |
| 50% | 435/234 |
| 70% | 455/253 |
| 90% | 485/250 |
| 95% | 488/253 |

Table 2 below sets out the properties of the catalysts used in the two operating conversion stages:

TABLE 2

| Catalyst Properties | | |
| --- | --- | --- |
| Composition, wt% | Hydrodesulfurisation 1st Stage Catalyst | ZSM-5[1] 2nd Stage Catalyst |
| Nickel | - | 1.0 |
| Cobalt | 3.4 | - |
| $MoO_3$ | 15.3 | - |
| Physical Properties | | |
| Particle Density,g/cc | - | 0.98 |
| Surface Area, $m^2/g$ | 260 | 336 |
| Pore Volume, cc/g | 0.55 | 0.65 |
| Pore Diameter, A | 85 | 77 |

[1] 65 wt% ZSM-5 and 35 wt% alumina

Both stages of the process were carried out in an isothermal pilot plant at the same conditions: pressure of 600 psig, space velocity of 1 LHSV, a hydrogen circulation rate of 3200 SCF/Bbl (4240 kPa abs, 1hr$^{-1}$ LHSV, 570 n.1.1$^{-1}$.). Experiments were run at reactor temperatures from 500 to 775°F (about 260 to 415°C).

The process according to the invention was operated in a cascade mode with both catalyst bed/reactor zones operated at the same pressure and space velocity and with no intermediate separation of the intermediate product of the hydrodesulfurisation.

Comparative Example (HDS-only)

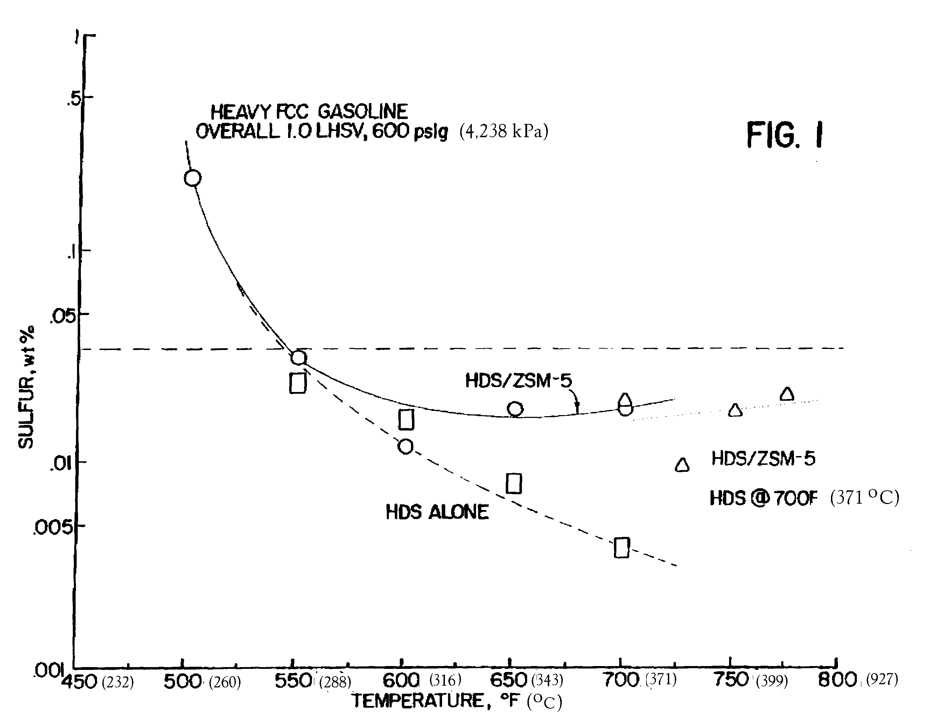

The process was operated with only a hydrodesulfurisation reaction zone. At a reaction temperature of 550°F (288°C), the product had a sulfur content of about 300 ppmw, and a clear research octane of about 92.5. As the temperature of the desulfurisation was increased, the sulfur content and the octane number continued to decline, as shown in Figures 1 and 2 (curves HDS Alone).

Example 1

The hydrodesulfurisation was run in cascade with ZSM-5 upgrading without intermediate hydrogen sulfide separation, with both beds under isothermal conditions. The results are again shown in Figures 1 and 2 (curves HDS/ZSM-5).

At a reaction temperature of 550°F (288°C) the product has a slightly higher or about the same sulfur content as the hydrodesulfurisation alone, that is a sulfur content of about 300 ppmw, and about the same clear research octane of about 92.5. As the temperature was increased to 600°F (315°C) the sulfur content of the product declined to about 200 ppmw, below that of the hydrodesulfurisation alone; the octane number started to increase for the cascade operation as compared to the hydrodesulfurisation alone.

When the operation was carried out at an operating temperature of 685°F (363°C) the octane number of the finished product was substantially the same as that of the feed naphtha, at 95.6 (clear-research), which is 4.6 octane units higher than the octane number for the same operation using only hydrodesulfurisation without second step upgrading, while meeting the desired sulfur content specifications.

Example 2

The HDS bed was operated at 700°F (370°C) and the ZSM-5 bed at a higher temperature (up to 775°F, 413°C) to simulate a temperature increase across the HDS bed. The octane of the product gasoline was increased to 99 (clear research). The desulfurisation achieved was sufficient to meet the 300 ppmw specification, as shown in Figures 1 and 2.

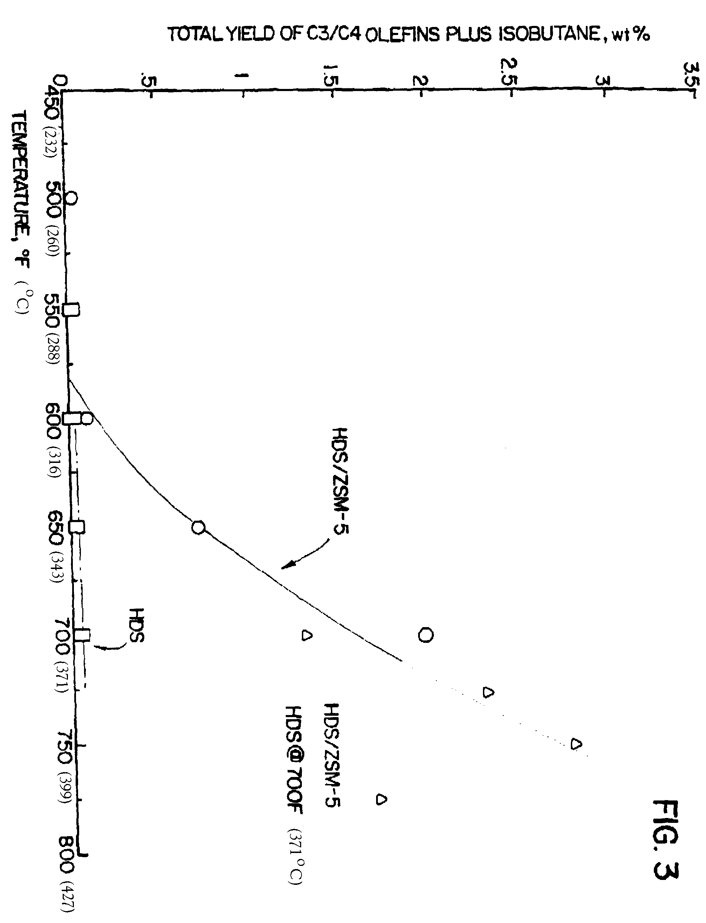

When operating with the second stage of the process there is a substantial production of propylene, butenes and isobutane, as shown in Figure 3 which reports the yields of these materials as a function of the operating temperatures. Using hydrodesulfurisation alone, it will be apparent that substantially no C3 and C4 compounds are produced. By contrast, with the combination process, whether operated at constant temperature or with the ZSM-5 bed at higher temperature, there is a substantial quantity of these light materials formed, and the proportion formed increases with temperature.

Therefore operating the process at progressively higher temperatures increases the production of desirable light fractions, increases the octane number of the gasoline boiling range product fractions, and effectively desulfurises the gasoline boiling range product to a sufficient extent.

Examples 3 to 6

The feed was cascaded from the first stage hydrodesulfurisation to the second stage (ZSM-5) upgrading without intermediate separation between the two stages. The intermediate product resulting from the hydrodesulfurisation stage conversion had properties, including sulfur content and octane number, which were consistent with the properties of the same type of feed converted in a conventional commercially operating hydrotreater. The product resulting from the second stage upgrading has physical properties, including sulfur content and octane number, which demonstrate the improvement obtained by the two-stage operation. The operating conditions were 0.84 LHSV (hr$^{-1}$), 3200 SCF/Bbl (570 n.1.1$^{-1}$.) hydrogen:oil and 600 psig (4240 kPa abs) pressure with the temperature varied as described below. The results are set out in Table 3 below.

A full range FCC naphtha was hydrodesulfurised in Examples 3 and 4 in a first (HDS) reaction zone at 700°F (370°C). There was substantially complete sulfur removal from the feed at a substantial loss in octane number. In Example 3 the second stage zeolitic upgrading was carried out under relatively mild conditions and served to minimise the loss of octane. In Example 4 operating the second stage conversion at higher severity caused the octane number of the final product to more closely approach that of the feed. Examples 5 and 6 show the same results achieved with a feed of somewhat heavier FCC naphtha.

TABLE 3

| HDS/ZSM-5 Upgrading of FCC Naphtha Cuts | | | | |
|---|---|---|---|---|
| Example | 3 | 4 | 5 | 6 |
| Reactor 1 Temp °F | 700 | 700 | 700 | 700 |
| °C | 371 | 371 | 371 | 371 |
| Reactor 2 Temp °F | 700 | 750 | 700 | 750 |
| °C | 371 | 399 | 371 | 399 |
| Feed | | | | |
| Boiling Range °F | 95-500 | 95-500 | 230-500 | 230-500 |
| °C | 35-260 | 35-260 | 110-260 | 110-260 |
| API Gravity | 54.3 | 54.3 | 34.2 | 34.2 |
| Sulfur, ppmw | 3800 | 3800 | 5200 | 5200 |
| Nitrogen, ppmw | 44 | 44 | 85 | 85 |
| Bromine No. | 45.81 | 45.81 | 13.86 | 13.86 |
| Research Octane | 93.5 | 93.5 | 95.8 | 95.8 |
| Motor Octane | 81.6 | 81.6 | 83.5 | 83.5 |
| Wt% C5$^{++}$ | 99.8 | 99.8 | 100.0 | 100.0 |
| Vol% C5 | 99.8 | 99.8 | 100.0 | 100.0 |
| Reactor 1 Product | | | | |
| Sulfur, ppmw | <20 | <20 | <20 | <20 |
| Nitrogen, ppmw | 2 | 2 | <1 | <1 |

TABLE 3   (continued)

| HDS/ZSM-5 Upgrading of FCC Naphtha Cuts | | | | |
|---|---|---|---|---|
| Example | 3 | 4 | 5 | 6 |
| Reactor 1 Product | | | | |
| Bromine No. | 0.11 | 0.11 | 0.03 | 0.03 |
| Research Octane | 80.8 | 80.8 | 89.3 | 89.3 |
| Motor Octane | 75.3 | 75.3 | 78.4 | 78.4 |
| Wt% C5 | 99.2 | 99.2 | 100.2 | 100.2 |
| Vol% C5+ | 97.6 | 97.6 | 102.2 | 102.2 |
| Vol% C3 Olefins | 0.0 | 0.0 | 0.0 | 0.0 |
| Vol% C4 Olefins | 0.0 | 0.0 | 0.0 | 0.0 |
| Vol% Isobutane | 0.0 | 0.0 | 0.0 | 0.0 |
| Potential Alkylate, Vol [1] | 0.0 | 0.0 | 0.0 | 0.0 |
| Reactor 2 Product | | | | |
| Sulfur, ppmw | <20 | <20 | <20 | <20 |
| Nitrogen, ppmw | <1 | <1 | <1 | <1 |
| Bromine No. | 1.63 | 1.49 | 1.51 | 0.91 |
| Research Octane | 87.4 | 92.9 | 93.2 | 97.3 |
| Motor Octane | 80.2 | 84.5 | 82.0 | 86.2 |
| Wt% C5 | 94.9 | 82.7 | 97.3 | 91.0 |
| Vol% C5+ | 92.5 | 80.4 | 98.7 | 91.7 |
| Vol% C3 Olefins | 0.2 | 0.3 | 0.2 | 0.3 |
| Vol% C4 Olefins | 0.4 | 0.4 | 0.5 | 0.4 |
| Vol% Isobutane | 1.6 | 5.8 | 1.0 | 3.7 |
| Potential Alkylate, Vol [1] | 1.0 | 1.2 | 1.2 | 1.2 |

[1] Potential alkylate defined as $1.7x(C4^=+C3^=, \%\ vol)$.

### Examples 7 and 8

In these Examples the temperature of the second (ZSM-5) stage was held constant at 700°F (370°C) while the HDS temperature was varied to either 350°F (177°C) or 550°F (288°C) at 0.84 LHSV ($hr^{-1}$, 3200 SCF/Bbl 570 n.1.1$^{-1}$.) hydrogen:oil, 600 psig (4240 kPa abs) pressure. The results are shown in Table 4 below.

Example 7 demonstrates the results of upgrading cracked naphtha with ZSM-5 without prior hydrotreatment. During the experiment, the temperature of the first reactor was 350°F (177°C), which is sufficiently low to make this stage hydrotreating ineffective and made this first stage merely a pre-heater. The second stage alone did not remove the required amount of sulfur.

In Example 8, mild hydrotreatment prior to the first stage did achieve the required desulfurisation. However, the first stage hydrotreatment completely saturated the olefins in the feed, as indicated by the bromine number reduction, and this resulted in a 9 number loss of research octane. The second stage processing over the ZSM-5 catalyst restored the lost octane.

TABLE 4

| Effect of Hydrotreating Severity on ZSM-5 Upgrading of FCC Naphtha | | |
|---|---|---|
| Example | 7 | 8 |
| Reactor 1 Temp °F | 350 | 550 |
| °C | 177 | 288 |
| Reactor 2 Temp °F | 700 | 700 |
| °C | 370 | 370 |
| Feed | | |
| Boiling Range °F | 95-500 | 95-500 |

TABLE 4   (continued)

| Effect of Hydrotreating Severity on ZSM-5 Upgrading of FCC Naphtha | | |
|---|---|---|
| Example | 7 | 8 |
| Feed | | |
| °C | 35-260 | 35-260 |
| API Gravity | 54.3 | 54.3 |
| Sulfur, ppmw | 3800 | 3800 |
| Nitrogen, ppmw | 44 | 44 |
| Bromine No. | 45.81 | 45.81 |
| Research Octane | 93.5 | 93.5 |
| Motor Octane | 81.6 | 81.6 |
| Wt% C5++ | 99.8 | 99.8 |
| Vol% C5 | 99.8 | 99.8 |
| Reactor 1 Product | | |
| Sulfur, ppmw | - | <20 |
| Nitrogen, ppmw | - | 3 |
| Bromine No. | - | 0.08 |
| Research Octane | - | 84.5 |
| Motor Octane | - | 76.8 |
| Wt% C5 | - | 99.3 |
| Vol% C5+ | - | 96.2 |
| Vol% C3 Olefins | - | 0.0 |
| Vol% C4 Olefins | - | 0.0 |
| Vol% Isobutane | - | 0.0 |
| Potential Alkylate, Vol% | - | 0.0 |
| Reactor 2 Product | | |
| Sulfur, ppmw | 1700 | 30 |
| Nitrogen, ppmw | 25 | <1 |
| Bromine No. | 12.70 | 1.40 |
| Research Octane | 94.0 | 90.0 |
| Motor Octane | 83.7 | 82.0 |
| Wt% C5 | 94.3 | 94.7 |
| Vol% C5+ | 88.8 | 92.0 |
| Vol% C3 Olefins | 0.5 | 0.2 |
| Vol% C4 Olefins | 1.1 | 0.4 |
| Vol% Isobutane | 1.9 | 1.6 |
| Potential Alkylate, Vol% | 2.7 | 1.0 |

Examples 9 and 10

These evaluations were conducted in a similar manner to those described above for the HDS/ZSM-5 studies using an isothermal pilot plant with both reaction zones at the same temperature (700°F, 370°C) and $H_2$ pressure (600 psig, 4240 kPa). The same Co-Mo/$Al_2O_3$ hydrotreating catalyst was used but the second stage catalysts were MCM-22 and zeolite beta. The zeolite beta catalyst was prepared from a steamed H-beta zeolite and the MCM-22 catalyst from unsteamed H-MCM-22 with alumina binder in each case. The feed was a heavy catalytically cracked gasoline similar to that used in the ZSM-5 studies; its properties are shown in Table 5 together with those for the feed used in the ZSM-5 studies.

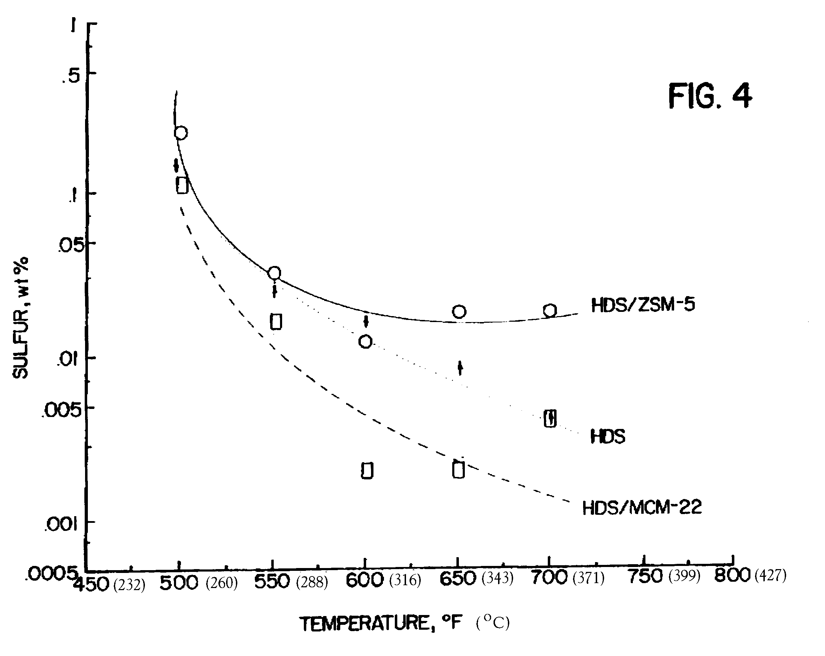

The result are given below in Tables 7 and 8 together with the results obtained with the ZSM-5 catalyst at 700°F (370°C) for comparison. The results are also shown graphically in Figures 4 to 9.

TABLE 5

| Feed Properties - Heavy Gasoline | | |
|---|---|---|
| Catalyst | MCM-22/Beta | ZSM-5 |
| H, wt% | 10.64 | 10.23 |
| S, wt% | 1.45 | 2.0 |
| N, wt% | 170 | 190 |
| Bromine No. | 11.7 | 14.2 |
| Paraffins, vol% | 24.3 | 26.5 |
| Research Octane | 94.3 | 95.6 |
| Motor Octane | 82.8 | 81.2 |
| Distillation, D 2887 (F°/C°) | | |
| 5% | 284/140 | 289/143 |
| 30% | 396/202 | 405/207 |
| 50% | 427/219 | 425/224 |
| 70% | 451/233 | 453/234 |
| 95% | 492/256 | 488/253 |

The HDS/zeolite catalyst system was presulfided with a 2% $H_2S$/98% $H_2$ gas mixture prior to the evaluations. Table 6 below sets out the properties of the catalysts used in the two operating conversion stages:

TABLE 6

| Catalyst Properties | | | |
|---|---|---|---|
| Composition, wt% | 1st stage | 2nd stage Catalyst (1) | |
| | HDS Catalyst | Beta | ZSM-5 |
| Nickel | - | - | 1.0 |
| Cobalt | 3.4 | - | - |
| $MoO_3$ | 15.3 | - | - |
| Alpha | - | 37 | 110 |
| Physical Properties | | | |
| Particle Density, g/cc | - | 0.91 | 0.98 |
| Surface Area, $m^2$/g | 260 | 396 | 336 |
| Pore Volume, cc/g | 0.55 | 0.72 | 0.65 |
| Avg. Pore Diameter, A | 85 | 73 | 77 |

(1) 65 wt% zeolite and 35 wt% alumina

TABLE 7

| Catalyst Evaluations | | | | |
|---|---|---|---|---|
| | | | Ni/ZSM-5 | MCM-22 |
| 420°+F Conv., % | | | 15.6 | 27.4 |
| C3=, wt% | | | 0.22 | 0.14 |
| C4=, wt% | | | 0.51 | 1.10 |
| C5=, wt% | | | 0.47 | 0.93 |
| Paraffins | | | | |
| Branched C4, wt% | | | 1.00 | 1.21 |

TABLE 7   (continued)

| Catalyst Evaluations | | | |
|---|---|---|---|
| | | Ni/ZSM-5 | MCM-22 |
| Paraffins | | | |
| Branched C5, wt% | | 0.86 | 0.86 |
| Gasoline Composition ($N_2$ stripped), wt% | | | |
| | Feed [1] | Ni/ZSM-5 | MCM-22 |
| Paraffins | 19.2 | 12.9 | 13.0 |
| Mono Cyclo Paraffins | 6.2 | 7.0 | 9.7 |
| Mono Olefins | 4.3 | 2.7 | 1.7 |
| Di Cyclo Paraffins | 1.9 | 2.9 | 3.6 |
| Cyclo Olefins + Dienes | 1.5 | 0.9 | 1.0 |
| Alkyl Benzenes | 31.9 | 38.8 | 34.3 |
| Indanes + Tetralins | 14.3 | 27.3 | 27.2 |
| Naphthalenes | 20.7 | 7.5 | 9.5 |

Note: [1] Feed to HDS/ZSM-5

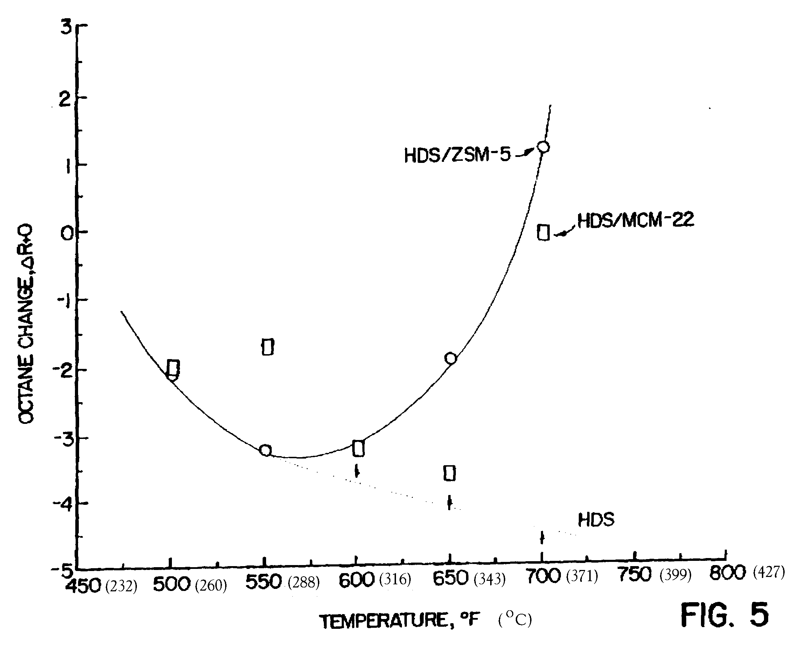

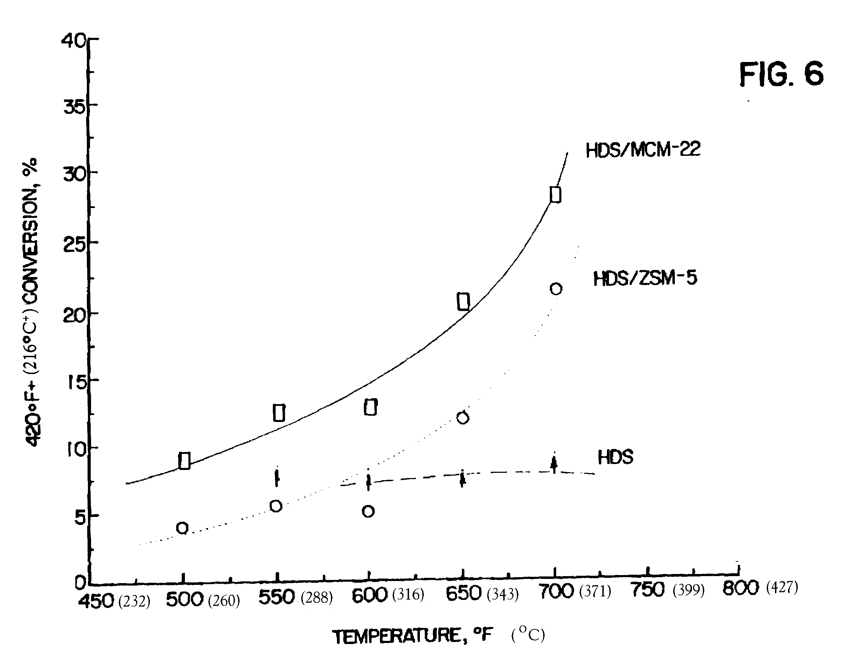

These results show that MCM-22 is more active for 420°F+ (215°C+) conversion (Fig 6) than the ZSM-5 but slightly less effective for octane enhancement than ZSM-5 (Fig. 5). The MCM-22 catalyst has a higher combined yield of isobutanes and isopentanes, mostly isobutanes (Table 7). The desulfurisation performances are shown in Fig. 3. The H-form MCM-22 achieved desulfurisation to less than 25 ppmw as compared to 180 ppmw for the Ni ZSM-5.

Consumption of the light ends produced in the second step of the process (and in the second step of the process of Example 10) in an alkylation process leads to very efficient utilization of the FCC cracked naphtha with the co-production of a low-sulfur, high octane cracked gasoline with a high octane alkylate.

TABLE 8

| Catalyst Evaluations | | | |
|---|---|---|---|
| | | Ni/ZSM-5 | Beta |
| 420°+F Conv., % | | 15.6 | 31.4 |
| C3=, wt% | | 0.22 | 0.08 |
| C4=, wt% | | 0.51 | 0.35 |
| C5=, wt% | | 0.47 | 0.49 |
| Paraffins | | | |
| Branched C4, wt% | | 1.00 | 1.47 |
| Branched C5, wt% | | 0.86 | 1.60 |
| Gasoline Composition ($N_2$ stripped), wt% | | | |
| | Feed [1] | Ni/ZSM-5 | Beta |
| Paraffins | 19.2 | 12.9 | 14.6 |
| Mono Cyclo Paraffins | 6.2 | 7.0 | 8.1 |
| Mono Olefins | 4.3 | 2.7 | 0 |
| Di Cyclo Paraffins | 1.9 | 2.9 | 3.2 |
| Cyclo Olefins + Dienes | 1.5 | 0.9 | 0.7 |
| Alkyl Benzenes | 31.9 | 38.8 | 36.4 |
| Indanes + Tetralins | 14.3 | 27.3 | 31.1 |
| Naphthalenes | 20.7 | 7.5 | 5.9 |

Note: [1] Feed to HDS/ZSM-5

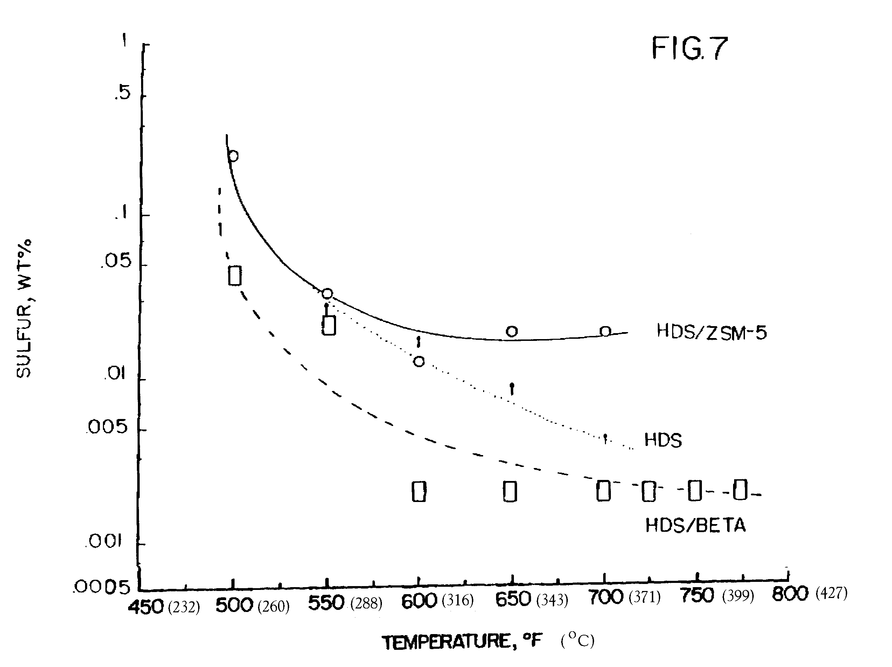

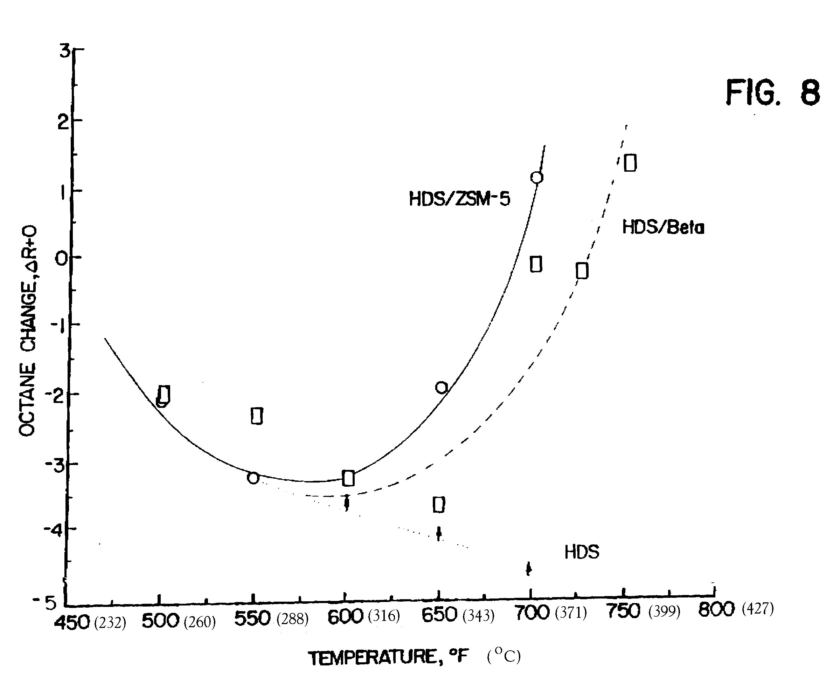

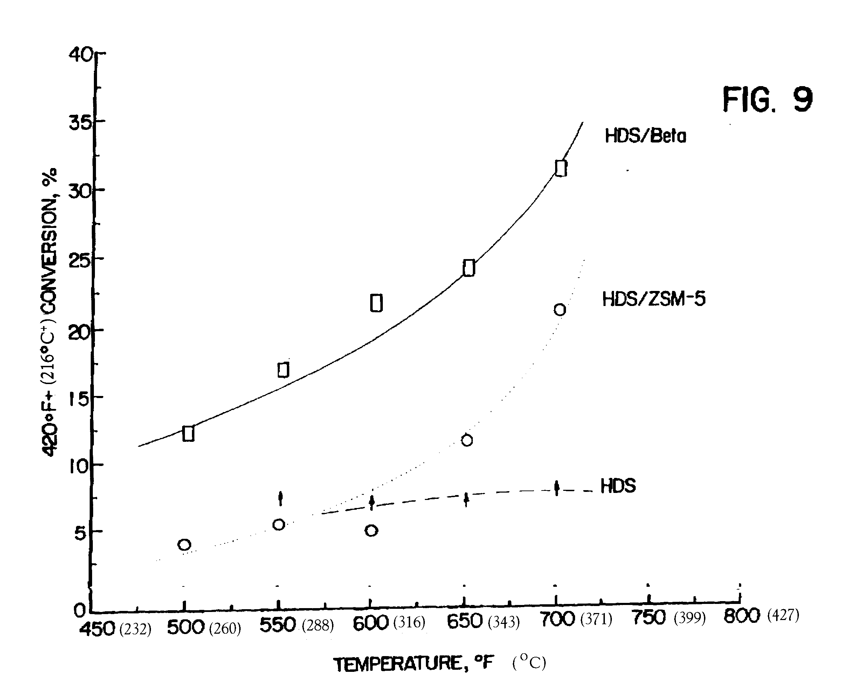

These results show that both zeolite beta is more active for 420°F+ (215°C+) conversion (Fig 9) than the ZSM-5 but slightly less effective for octane enhancement than ZSM-5 (Fig. 8). The zeolite beta catalyst has a very high yield of isobutanes and isopentanes (Table 8). The desulfurisation performances are shown in Fig 7. The H-form beta achieved desulfurisation to less than 25 ppmw as compared to 180 ppmw for the NiZSM-5.

Examples 11 and 12

Employing the same testing regime as in Examples 9 and 10, zeolites ZSM-23 (Example 11) and ZSM-35 (Example 12) were employed, in the form of 1/6 inch (1.6 mm) 65% H-form zeolite/35% silica extrudates, as catalyst in the second reaction zone.

The results are set forth in Table 9.

TABLE 9

| Catalyst Evaluations | | | | |
|---|---|---|---|---|
| Gasoline Composition ($N_2$ stripped), wt% | | | | |
| | Feed [1] | Ni/ZSM-5 | ZSM-23 | ZSM-35 |
| Paraffins | 19.2 | 12.9 | 13.0 | 13.2 |
| Mono Cyclo Paraffins | 6.2 | 7.0 | 7.1 | 8.0 |
| Mono Olefins | 4.3 | 2.7 | 1.2 | 0.0 |
| Di Cyclo Paraffins | 1.9 | 2.9 | 4.3 | 5.1 |
| Cyclo Olefins + Dienes | 1.5 | 0.9 | 0.5 | 0.1 |
| Alkyl Benzenes | 31.9 | 38.8 | 33.3 | 33.4 |
| Indanes + Tetralins | 14.3 | 27.3 | 32.1 | 34.2 |
| Naphthalenes | 20.7 | 7.5 | 9.3 | 6.2 |

Note: [1] Feed to HDS/ZSM-5

These results show that ZMS-23 and ZSM-35 are more gasoline selective, and their products are less olefinic than ZSM-5, an important quality for reformulated gasolines. ZSM-23, ZSM-35 and other constrained intermediate pore zeolite materials are thus particularly suited for processing lighter feedstocks and full-range FCC gasoline. Desulfurisation activity for these zeolites is comparatively higher at temperatures greater than about 302 or 316°C (575 or 600°F), and their octane retention or enhancement at temperatures below 357°C (675°F) is more effective than that of ZSM-5. At zero octane change (both product and feed have the same octane), C5+ gasoline yields for ZSM-23 and ZSM-35 are about 2 vol% higher than that for ZSM-5.

Example 13

Employing the same testing regime as in the previous Examples, mixtures of ZSM-5 and MCM-22 were evaluated as catalyst in the second reaction zone.

The ZSM-5 catalyst was prepared from a steamed ZSM-5 and the MCM-22 catalyst from unsteamed H-MCM-22, with alumina binder in each case. The properties of each catalyst are described in Table 10. The feeds are the heavy catalytically cracked gasolines of Table 5.

TABLE 10

| Catalyst Properties | | |
|---|---|---|
| Zeolite | MCM-22 | ZSM-5 |
| Steamed | No | Yes |
| Alpha Value | 260 | 110 |
| Zeolite, wt% | 65 | 65 |
| Alumina | 35 | 35 |
| Physical Properties | | |
| Particle Density, g/cc | 0.80 | 0.98 |
| Real Density, cc/g | 2.59 | - |

TABLE 10   (continued)

| Catalyst Properties | | |
|---|---|---|
| Zeolite | MCM-22 | ZSM-5 |
| Physical Properties | | |
| Surface Area, m²/g | 335 | 336 |
| Pore Volume, cc/g | 0.86 | 0.65 |
| Average Pore Diameter, A | 103 | 77 |

A catalyst system containing a combination of ZSM-5 and MCM-22 as described above, was evaluated and provided the results presented below in Table 11 together with the results achieved with the individual ZSM-5 and MCM-22 catalysts.

TABLE 11

| Performance Comparison | | | | |
|---|---|---|---|---|
| Zeolite Catalyst Composition | Run 3 | Run 4 | Run 5 | Run 6 |
| ZSM-5 catalyst | 100% | 0% | 70% | 30% |
| MCM-22 catalyst | 0% | 100% | 30% | 70% |
| Performance | | | | |
| Gasoline | | | | |
| Gasoline Octane, R+O | 98.6 | 94.2 | 96.0 | 95.0 |
| C5-330°F (166°C) Yield, wt% | 17.9 | 19.0 | 18.2 | 18.7 |
| C5-420°F (216°C) Yield, wt% | 50.2 | 57.0 | 52.2 | 55.0 |
| Olefins and Branched Paraffins | | | | |
| C3=, wt% | 0.22 | 0.14 | 0.20 | 0.16 |
| C4=, wt% | 0.51 | 1.10 | 0.69 | 0.92 |
| C5=, wt% | 0.47 | 0.93 | 0.61 | 0.79 |
| Branched C4, wt% | 1.00 | 1.21 | 1.06 | 1.15 |
| Branched C5, wt% | 0.86 | 1.90 | 1.17 | 0.83 |

As Table 11 shows the MCM-22/ZSM-5 catalyst produced more gasolines and less 216°C+ bottoms than ZSM-5. In addition, the mixed catalyst produced more light olefins and branched light paraffins, which can be upgraded into high-octane gasoline by conventional alkylation, than ZSM-5: moreover the combined catalysts imparted an octane boost over MCM-22 used alone.

Example 14

Mixtures of ZSM-5 and beta were evaluated as second reaction zone catalysts employing as feed the 143-253°C-boiling feed identified in Table 5. All catalysts were tested in the form of 65/35 zeolite(s)/alumina composites, in combination with a hydrodesulfurisation catalyst (HDS) in a 50/50 volumetric ratio of HDS/cracking catalyst.

Operation conditions were 1.0 LHSV, 371°C (700°F) and 4240 kPa (600 psig) in the HDS reactor and the cracking reactor. The results are summarised in Table 12.

TABLE 12

| Performance Comparison | | | | |
|---|---|---|---|---|
| Zeolite Catalyst Composition | | | | |
| ZSM-5, % | 100 | 70 | 30 | 0 |
| zeolite beta, % | 0 | 30 | 70 | 100 |
| Performance | | | | |
| Gasoline Octane, R+O | 96.8 | 95.8 | 94.5 | 93.5 |

TABLE 12   (continued)

| Performance Comparison | | | |
| --- | --- | --- | --- |
| Zeolite Catalyst Composition | | | |
| Performance | | | |
| C5-330°F (116°C) Yield, wt% | 17.6 | 18.8 | 20.0 | 20.9 |
| C5-420°F (216°C) Yield, wt% | 50.2 | 53.1 | 57.0 | 59.9 |

As the data show, the zeolite beta-containing catalyst produces more lighter-cut gasoline with a lower octane than the ZSM-5 catalyst. The catalyst system which contains both ZSM-5 and zeolite beta produces more lighter-cut gasoline than the ZSM-5 catalyst at the expense of octane, yet the product octane numbers are higher than those achieved by the zeolite beta catalyst, at the expense of yield. This combined system offers flexibility in controlling product octane and light-cut gasoline yield to meet overall gasoline pool needs.

In the second stage, as has been made clear hereinabove, the major reaction responsible for octane increase or preservation is the conversion of low-octane components, such as normal paraffins, to light gases. However, simultaneous conversion of higher octane paraffins (branched paraffins) can result in an undesirable loss of gasoline yields. Using a large-size zeolite crystallite which significantly reduces diffusion rates of branched paraffins into zeolite pores results in improved gasoline yield. It has been found that the use of zeolite crystals having an effective radius of at least 0.25 micron, preferably at least 0.5 micron, or even more preferably, at least 1 micron, limits the loss of gasoline boiling range materials by reducing conversion of branched paraffins owing to the reduced diffusion rate of branched paraffins into zeolite pores as crystal size is increased. For present purposes, a crystal having an effective radius of at least 0.25 micron, is one capable of containing within its boundaries, a sphere whose radius is at least 0.25 micron, or in other words one having a diameter of at least 0.5 micron.

By way of demonstration, blending octane and dynamic sorption rate of C6 isomers can be considered, along with the effect of zeolite crystallite size. The chemistry for C6 isomers can be extended to other paraffins found in FCC gasoline.

Blending octanes of C6 isomers are shown in Table 13 below. n-Hexane has a very low octane (19 R+O) while 2,2-dimethylbutane has a high octane (89 R+O). For the present process, it is desirable to retain branched paraffins and to convert normal paraffins as much as possible.

TABLE 13

| Blending Research Octane (R+O) | |
| --- | --- |
| n-hexane | 19 |
| 2-methyl pentane | 41 |
| 3-methyl pentane | 86 |
| 2,2-dimethyl butane | 89 |

Dynamic sorption rates were measured at 373°K using 80 torr of n-hexane and 2,2-dimethylbutane. P. E. Eberly, "Zeolite Chemistry and Catalysis", J. A. Rabo, Ed, p. 395 ACS Monograph 171, Washington, D.C., 1976 describes the dynamic sorption rate (Q) as a function of diffusivity and effective radius of zeolite crystallites:

$$Q = ((Q_t\text{-}Q_0)/(Q_\infty\text{-}Q_0)/\sqrt{t}) = f \sqrt{(D/\pi a^2)}$$

where $Q_0$, $Q_t$, and $Q_\infty$ are amounts sorbed at time equals 0, t and $\infty$, respectively. D is diffusivity and a is effective radius. Effective radius, a, can be defined as:

$$a = 3V/SA,$$

where V is volume and SA is external surface area of zeolite crystallites, respectively.

Dynamic sorption rate of four intermediate pore size zeolites are shown in Table 14 below. The dynamic sorption rate is given in units of $mm^2/g/\sqrt{s}$.

TABLE 14

| | Crystallite Size [1] | n-Hexane | 2,2 Dimethyl Butane |
|---|---|---|---|
| ZSM-23 | 0.4 | 44 | 0.1 |
| ZSM-11 | <0.1 | 48 | 2.0 |
| ZSM-5 | <0.1 | 50 | 6.0 |

[1] microns

As shown in Table 14, for intermediate pore size zeolites, zeolite type has little effect on dynamic sorption rates of normal paraffins (n-hexane). In contrast, dynamic sorption rates of 2,2-dimethylbutane were significantly reduced for ZSM-5 samples as crystallite size increases, as shown below in Table 15. Dynamic sorption rates for normal paraffins (n-hexane) remained relatively constant as crystallite size increases. Accordingly, using zeolite crystallites of at least 0.5 micron diameter (corresponding to an effective radius of at least 0.25 micron), will significantly reduce the conversion of branched paraffins, thereby improving gasoline yield in the second step of the present process.

TABLE 15

| | Crystallite Size [1] | n-Hexane | 2,2 Dimethyl Butane |
|---|---|---|---|
| ZSM-5 (L) | >2 | 55 | 0.2 |
| ZSM-5 (M) | 0.5 | 53 | 2 |
| ZSM-5 (S) | <0.1 | 50 | 6 |

## Claims

1. A process of upgrading a sulfur-containing olefinic, catalytically cracked naphtha boiling in the gasoline boiling range which comprises:

   contacting the sulfur-containing olefinic, catalytically cracked naphtha with hydrodesulfurisation catalyst in a first reaction zone, operating under a combination of elevated temperature, elevated pressure and an atmosphere comprising hydrogen, to produce an intermediate product comprising a normally liquid fraction which has a reduced sulfur content and a reduced octane number as compared to the feed;
   contacting at least the gasoline boiling range portion of the intermediate product in a second reaction zone with a catalyst of acidic functionality in the presence of hydrogen to effect cracking of paraffins to convert the intermediate product to a product comprising a fraction boiling in the gasoline boiling range having a higher octane number than the gasoline boiling range fraction of the intermediate product.

2. The process as claimed in claim 1 in which said feed fraction comprises a light naphtha fraction having a boiling range within the range of C6 to 165.5°C (330°F).

3. The process as claimed in claim 1 in which said feed fraction comprises a full range naphtha fraction having a boiling range within the range of C5 to 215.5°C (420°C).

4. The process as claimed in claim 1 in which said feed fraction comprises a heavy naphtha fraction having a boiling range within the range of 165.5-260°C (330 to 500°F).

5. The process as claimed in claim 1 in which said feed fraction comprises a heavy naphtha fraction having a boiling range within the range of 165.5 to 211°C (330 to 412°F).

6. The process as claimed in claim 1 in which said feed is a cracked naphtha fraction comprising olefins.

7. The process as claimed in claim 1 or claim 6 wherein said feed fraction comprises a naphtha fraction having a 95 percent point of at least 163°C (325°F).

8. The process as claimed in claim 7 in which said feed fraction comprises a naphtha fraction having a 95 percent point of at least about 176.6°C (350°F).

9. The process as claimed in claim 8 in which said feed fraction comprises a naphtha fraction having a 95 percent point of at least about 193°C (380°C).

10. The process as claimed in claim 9 in which said feed fraction comprises a naphtha fraction having a 95 percent point of at least about 204.5°C (400°F).

11. The process as claimed in claim 1 wherein said feed fraction has an olefin content of at least 5 percent by weight.

12. The process as claimed in claim 1 wherein said feed fraction has an olefin content of 10 to 20 weight percent, a sulfur content of 100 to 5000 ppmw and a nitrogen content of 5 to 250 ppmw.

13. The process as claimed in claim 1 wherein the catalyst of the acidic functionality comprises an intermediate pore size zeolite.

14. The process as claimed in claim 13 in which the zeolite has the topology of ZSM-5, ZSM-12 or MCM-22.

15. The process as claimed in claim 13 in which the zeolite is one which sorbs 10 to 40 mg of 3-methylpentane at 90°C, 90 torr, per gram of dry zeolite in the hydrogen form.

16. The process as claimed in claim 15 wherein said zeolite is ZSM-22, ZSM-23 or ZSM-35.

17. The process as claimed in claim 1 wherein the catalyst of acidic functionality comprises a zeolite having the topology of zeolite beta.

18. The process as claimed in claim 14 wherein the catalyst of acidic functionality comprises both a zeolite having the topology of ZSM-5 and a zeolite having the topology of MCM-22.

19. The process as claimed in claim 17 wherein said catalyst comprises both a zeolite having the topology of ZSM-5 and a zeolite having the topology of beta.

20. The process as claimed in claim 18 wherein the weight ratio of ZSM-5 to the second-mentioned zeolite is 0.1:1 to 10:1.

21. The process as claimed in claim 15 wherein the catalyst of acidic functionality comprises both a zeolite having the topology of ZSM-5 and a zeolite which sorbs 10 to 40 mg of 3-methylpentane at 90°C, 90 torr, per gram of dry zeolite in the hydrogen form.

22. The process as claimed in claim 13 wherein at least the gasoline boiling range portion of the intermediate product is contacted with a catalyst system having acidic functionality and comprising both a large pore zeolite and said intermediate pore zeolite.

23. The process as claimed in claim 22 wherein the large and intermediate pore zeolites are contacted simultaneously by said portion of the intermediate product.

24. The process as claimed in claim 22 wherein the zeolites possess the topology of faujasite and ZSM-5, respectively.

25. The process as claimed in claim 22 wherein the large pore zeolite is USY, REY or ZSM-20.

26. The process as claimed in claim 22 wherein the large and intermediate pore zeolites are contacted sequentially, in that order, by said portion of the intermediate product.

27. The process as claimed in claim 22 wherein the zeolites possess the topology of beta and ZSM-5, respectively.

28. The process as claimed in claim 13 wherein at least the gasoline boiling range portion of the intermediate product is contacted with a zeolite having a reduced surface acidity.

29. The process as claimed in claim 28 wherein the reduction of surface acidity of the zeolite is effected by steaming.

30. The process as claimed in claim 28 wherein the reduction of surface acidity is effected, without substantial reduction in overall acid activity, by contacting the zeolite with a dicarboxylic acid.

31. The process as claimed in claim 28 wherein the surface acidity of the zeolite is reduced by at least 25%, preferably by at least 40%.

32. The process as claimed in claim 13 in which the intermediate pore size zeolite is in the aluminosilicate form.

33. The process as claimed in claim 1 in which the acidic catalyst includes a metal component having hydrogenation functionality.

34. The process as claimed in claim 1 in which the hydrodesulfurisation catalyst comprises a Group VIII and a Group VI metal.

35. The process as claimed in claim 1 in which the hydrodesulfurisation is carried out at a temperature of 205-427°C, a pressure of 4.5 to 104.5 bar, a space velocity of about 0.5 to 10 LHSV, and a hydrogen to hydrocarbon ratio of about 500 to 5000 standard cubic feet of hydrogen per barrel of feed (89 to 890 $m^3/m^3$).

36. The process as claimed in claim 35 in which the hydrodesulfurisation is carried out at a temperature of about 260 to 399°C, pressure of about 21.7 to 70 bar, a space velocity of about 1 to 6 LHSV, and a hydrogen to hydrocarbon ratio of about 1000 to 2500 standard cubic feet of hydrogen per barrel of feed (178 to 445 $m^3/m^3$).

37. The process as claimed in claim 1 in which the second stage upgrading is carried out at a temperature of about 149 to 482°C, a pressure of about 4.5 to 104.5 bar, a space velocity of about 0.5 to 10 LHSV, and a hydrogen to hydrocarbon ratio of about 0 to 5000 standard cubic feet of hydrogen per barrel of feed (0 to 890 $m^3/m^3$).

38. The process as claimed in claim 37 in which the second stage upgrading is carried out at a temperature of about 177 to 427°C, a pressure of about 21.7 to 70 bar, a space velocity of about 1 to 6 LHSV, and a hydrogen to hydrocarbon ratio of about 1000 to 2500 standard cubic feet of hydrogen per barrel of feed (178 to 445 $m^3/m^3$).

39. The process as claimed in claim 37 in which the hydrodesulfurisation is carried out at a temperature of 260 to 427°C, a pressure of 21.7 to 70 bar, a space velocity of about 1 to 6 LHSV, and a hydrogen to hydrocarbon ratio of about 1000 to 2500 standard cubic feet of hydrogen per barrel of feed (178 to 445 $m^3/m^3$).

40. The process as claimed in claim 1 which is carried out in cascade mode with the entire effluent from the first reactor zone passed to the second reaction zone.

41. The process as claimed in claim 1 which is carried out in two stages with an interstage separation of light ends and heavy ends with the heavy ends fed to the second reaction zone.

42. The process as claimed in claim 1 wherein the contacting in the second reaction zone is carried out in the presence of hydrogen essentially free of hydrogen sulfide.

43. The process as claimed in claim 42 wherein in the second reaction zone the partial pressure of hydrogen sulfide is not more than 344.75 mbar (5 psia) and the ammonia partial pressure is not more than 6.895 mbar (0.1 psia).

44. The process as claimed in claim 1 wherein the contacting in the second reaction zone takes place under endothermic conditions, and sufficient heat is provided to supply at least a portion of the thermal energy required for such endothermic conversion.

45. The process as claimed in claim 1 wherein said portion of the intermediate product is contacted with the catalyst in the second reaction zone together with a light reformate.

46. The process as claimed in claim 45 wherein the light reformate has an end boiling point in the range 110 to 121°C (230-250°F).

47. The process as claimed in claim 45 wherein the light reformate boils between 38 and 100°C (100 and 212°F).

**48.** The process as claimed in claim 1 wherein, before hydrodesulfurisation, said sulfur-containing feed is fractionated into a plurality of reactions of differing boiling range which fractions are introduced into the first reaction zone at locations spaced along its length.

**49.** The process as claimed in claim 48 wherein the feed is fractionated into two or three fractions.

**50.** The process as claimed in claim 48 wherein the feed is fractionated into a $143°C^+$ ($290°F^+$) fraction and at least one lower-boiling fraction.

**51.** The process as claimed in claim 50 wherein said lower-boiling fractions include a 93-143°C (200-290°F) fraction and/or a C5-65.5°C (C5-150°F) fraction.

**52.** The process as claimed in claim 48 wherein the highest-boiling of said fractions is introduced into the reaction zone at its inlet whilst progressively lower-boiling fractions are introduced at locations progressively further downstream.

**53.** The process as claimed in claim 13 wherein said intermediate pore size zeolite comprises crystallites having an effective radius *of* at least 0.25 micrometers.

**54.** The process as claimed in claim 53 wherein said radius is at least 0.5 micrometers.

**55.** the process as claimed in claim 54 wherein said radius is at least 1 micrometer.

**Patentansprüche**

**1.** Verfahren zur Veredelung von schwefelhaltigen, olefinischem, katalytisch gecracktem Naphtha, das im Siedebereich von Benzin siedet, welches umfaßt:

Kontakt des olefinischen, katalytisch gecrackten Naphthas in einer ersten Reaktionszone, die bei einer Kombination aus erhöhter Temperatur, erhöhtem Druck und einer Wasserstoff umfassenden Atmosphäre arbeitet, mit einem Wasserstoffentschefelungskatalysator, wodurch ein Zwischenprodukt erzeugt wird, das eine normalerweise flüssige Fraktion umfaßt, die im Vergleich mit der Beschickung einen geringeren Schwefelgehalt und eine niedrigere Octanzahl aufweist,

Kontakt von zumindest dem Anteil im Siedebereich von Benzin des Zwischenproduktes in einer zweiten Reaktionszone mit einem Katalysator mit saurer Funktionalität in Gegenwart von Wasserstoff, damit das Cracken von Paraffin erfolgt, damit das Zwischenprodukt in ein Produkt überführt wird, das eine Fraktion umfaßt, die im Siedebereich von Benzin siedet und eine höhere Octanzahl als die Fraktion im Siedebereich von Benzin des Zwischenproduktes hat.

**2.** Verfahren nach Anspruch 1, wobei die Beschickungsfraktion eine leichte Naphthafraktion mit einem Siedebereich im Bereich von $C_6$ bis 165,5°C (330°F) umfaßt.

**3.** Verfahren nach Anspruch 1, wobei die Beschickungsfraktion eine Naphthafraktion im Gesamtbereich mit einem Siedebereich im Bereich von $C_5$ bis 215,5°C (420°C) umfaßt.

**4.** Verfahren nach Anspruch 1, wobei die Beschickungsfraktion eine schwere Naphthafraktion mit einem Siedebereich im Bereich von 165,5 bis 260°C (330 bis 500°F) umfaßt.

**5.** Verfahren nach Anspruch 1, wobei die Beschickungsfraktion eine schwere Naphthafraktion mit einem Siedebereich im Bereich von 165,5 bis 211°C (330 bis 412°F) umfaßt.

**6.** Verfahren nach Anspruch 1, wobei die Beschickung eine gecrackte Naphthafraktion ist, die Olefine umfaßt.

**7.** Verfahren nach Anspruch 1 oder Anspruch 6, wobei die Beschickungsfraktion eine Naphthafraktion mit einem 95%-Punkt von mindestens 163°C (325°F) umfaßt.

**8.** Verfahren nach Anspruch 7, wobei die Beschickungsfraktion eine Naphthafraktion mit einem 95%-Punkt von mindestens etwa 176,6°C (350°F) umfaßt.

**9.** Verfahren nach Anspruch 8, wobei die Beschickungsfraktion eine Naphthafraktion mit einem 95%-Punkt von mindestens etwa 193°C (380°C) umfaßt.

**10.** Verfahren nach Anspruch 9, wobei die Beschickungsfraktion eine Naphthafraktion mit einem 95%-Punkt von mindestens etwa 204,5°C (400°F) umfaßt.

**11.** Verfahren nach Anspruch 1, wobei die Beschickungsfraktion einen Olefingehalt von mindestens 5 Gew.-% aufweist.

**12.** Verfahren nach Anspruch 1, wobei die Beschickungsfraktion einen Olefingehalt von 10 bis 20 Gew.-%, einen Schwefelgehalt von 100 bis 500 Gewichtsteilen pro Million und einen Stickstoffgehalt von 5 bis 250 Gewichtsteilen pro Million aufweist.

**13.** Verfahren nach Anspruch 1, wobei der Katalysator mit saurer Funktionalität einen Zeolith mit mittlerer Porengröße umfaßt.

**14.** Verfahren nach Anspruch 13, wobei der Zeolith die Topologie von ZSM-5, ZSM-12 oder MCM-22 hat.

**15.** Verfahren nach Anspruch 13, wobei der Zeolith ein Zeolith ist, der bei 90°C, 90 Torr pro Gramm des trockenen Zeoliths in der Wasserstofform 10 bis 40 mg 3-Methylpentan sorbiert.

**16.** Verfahren nach Anspruch 15, wobei der Zeolith ZSM-22, ZSM-23 oder ZSM-35 ist.

**17.** Verfahren nach Anspruch 1, wobei der Katalysator mit saurer Funktionalität einen Zeolith mit der Topologie von Zeolith Beta umfaßt.

**18.** Verfahren nach Anspruch 14, wobei der Katalysator mit saurer Funktionalität sowohl einen Zeolith mit der Topologie von ZSM-5 als auch einen Zeolith mit der Topologie von MCM-22 umfaßt.

**19.** Verfahren nach Anspruch 17, wobei der Katalysator sowohl einen Zeolith mit der Topologie von ZSM-5 als auch einen Zeolith mit der Topologie von Beta umfaßt.

**20.** Verfahren nach Anspruch 18, wobei das Gewichtsverhältnis von ZSM-5 zum als zweites genannten Zeolith 0,1:1 bis 10:1 beträgt.

**21.** Verfahren nach Anspruch 15, wobei der Katalysator mit saurer Funktionalität sowohl einen Zeolith mit der Topologie von ZSM-5 als auch einen Zeolith umfaßt, der bei 90°C, 90 Torr pro Gramm des trockenen Zeoliths in der Wasserstofform 10 bis 40 mg 3-Methylpentan sorbiert.

**22.** Verfahren nach Anspruch 13, wobei zumindest der Anteil im Siedebereich von Benzin des Zwischenproduktes mit einem Katalysatorsystem in Kontakt gebracht wird, das eine saure Funktionalität aufweist und sowohl einen großporigen Zeolith als auch den Zeolith mit mittleren Poren umfaßt.

**23.** Verfahren nach Anspruch 22, wobei der Zeolith mit großen Poren und der mit mittleren Poren gleichzeitig mit dem Anteil des Zwischenproduktes in Kontakt gebracht werden.

**24.** Verfahren nach Anspruch 22, wobei die Zeolithe die Topologie von Faujasit bzw. ZSM-5 aufweisen.

**25.** Verfahren nach Anspruch 22, wobei der großporige Zeolith USY, REY oder ZSM-20 ist.

**26.** Verfahren nach Anspruch 22, wobei der Zeolith mit großen Poren und der mit mittleren Poren in dieser Reihenfolge nacheinander mit dem Anteil des Zwischenproduktes in Kontakt gebracht werden.

**27.** Verfahren nach Anspruch 22, wobei die Zeolithe die Topologie von Beta bzw. ZSM-5 aufweisen.

28. Verfahren nach Anspruch 13, wobei zumindest der Anteil im Siedebereich von Benzin des Zwischenproduktes mit einem Zeolith in Kontakt gebracht wird, der eine geringere Oberflächenacidität hat.

29. Verfahren nach Anspruch 28, wobei die Verringerung der Oberflächenacidität des Zeoliths durch Dampfbehandlung erfolgt.

30. Verfahren nach Anspruch 28, wobei die Verringerung der Oberflächenacidität durch Kontakt des Zeoliths mit einer Dicarbonsäure ohne wesentliche Verringerung der gesamten sauren Aktivität erfolgt.

31. Verfahren nach Anspruch 28, wobei die Oberflächenacidität des Zeoliths um mindestens 25%, vorzugsweise um mindestens 40% verringert wird.

32. Verfahren nach Anspruch 13, wobei der Zeolith mit mittlerer Porengröße in der Aluminosilicatform vorliegt.

33. Verfahren nach Anspruch 1, wobei der saure Katalysator eine Metallkomponente mit Hydrierungsfunktionalität einschließt.

34. Verfahren nach Anspruch 1, wobei der Wasserstoffentschwefelungskatalysator ein Metall der Gruppe VIII und ein Metall der Gruppe VI umfaßt.

35. Verfahren nach Anspruch 1, wobei die Wasserstoffentschwefelung bei einer Temperatur von 205 bis 427°C, einem Druck von 4,5 bis 104,5 bar, einer Raumgeschwindigkeit von etwa 0,5 bis 10 LHSV und einem Wasserstoff/Kohlenwasserstoff-Verhältnis von etwa 500 bis 5000 standard cubic feet Wasserstoff pro Barrel der Beschickung (89 bis 890 m$^3$/m$^3$) erfolgt.

36. Verfahren nach Anspruch 35, wobei die Wasserstoffentschwefelung bei einer Temperatur von etwa 260 bis 399°C, einem Druck von etwa 21,7 bis 70 bar, einer Raumgeschwindigkeit von etwa 1 bis 6 LHSV und einem Wasserstoff/Kohlenwasserstoff-Verhältnis von etwa 1000 bis 2500 standard cubic feet Wasserstoff pro Barrel der Beschickung (178 bis 445 m$^3$/m$^3$) erfolgt.

37. Verfahren nach Anspruch 1, wobei die Veredelung in der zweiten Stufe bei einer Temperatur von etwa 149 bis 482°C, einem Druck von etwa 4,5 bis 104,5 bar, einer Raumgeschwindigkeit von etwa 0,5 bis 10 LHSV und einem Wasserstoff/Kohlenwasserstoff-Verhältnis von etwa 0 bis 5000 standard cubic feet Wasserstoff pro Barrel der Beschickung (0 bis 890 m$^3$/m$^3$) erfolgt.

38. Verfahren nach Anspruch 37, wobei die Veredelung in der zweiten Stufe bei einer Temperatur von etwa 177 bis 427°C, einem Druck von etwa 21,7 bis 70 bar, einer Raumgeschwindigkeit von etwa 1 bis 6 LHSV und einem Wasserstoff/Kohlenwasserstoff-Verhältnis von etwa 1000 bis 2500 standard cubic feet Wasserstoff pro Barrel der Beschickung (178 bis 445 m$^3$/m$^3$) erfolgt.

39. Verfahren nach Anspruch 37, wobei die Wasserstoffentschwefelung bei einer Temperatur von 260 bis 427°C, einem Druck von 21,7 bis 70 bar, einer Raumgeschwindigkeit von etwa 1 bis 6 LHSV und einem Wasserstoff/Kohlenwasserstoff-Verhältnis von etwa 1000 bis 2500 standard cubic feet Wasserstoff pro Barrel der Beschickung (178 bis 445 m$^3$/m$^3$) erfolgt.

40. Verfahren nach Anspruch 1, das nach der Kaskadenart erfolgt, wobei der gesamte Abfluß aus der ersten Reaktorzone zur zweiten Reaktionszone geleitet wird.

41. Verfahren nach Anspruch 1, das in zwei Stufen bei einer Abtrennung von Leichtöl und Dicköl zwischen den Stufen erfolgt, wobei das Dicköl der zweiten Reaktionszone zugeführt wird.

42. Verfahren nach Anspruch 1, wobei der Kontakt in der zweiten Reaktionszone in Gegenwart von Wasserstoff erfolgt, der im wesentlichen frei von Schwefelwasserstoff ist.

43. Verfahren nach Anspruch 42, wobei in der zweiten Reaktionszone der Partialdruck von Schwefelwasserstoff nicht mehr als 344,75 mbar (5 psia) und der Partialdruck von Ammoniak nicht mehr als 6,895 mbar (0,1 psia) betragen.

44. Verfahren nach Anspruch 1, wobei der Kontakt in der zweiten Reaktionszone bei endothermen Bedingungen erfolgt und ausreichend Wärme vorgesehen ist, damit zumindest ein Teil der für diese endotherme Umwandlung erforderlichen Wärmeenergie zugeführt wird.

45. Verfahren nach Anspruch 1, wobei der Anteil des Zwischenproduktes in der zweiten Reaktionszone zusammen mit einem leichten Reformat mit dem Katalysator in Kontakt gebracht wird.

46. Verfahren nach Anspruch 45, wobei das leichte Reformat einen Endsiedepunkt im Bereich von 110 bis 121°C (230 bis 250°F) hat.

47. Verfahren nach Anspruch 45, wobei das leichte Reformat zwischen 38 und 100°C (100 und 212°F) siedet.

48. Verfahren nach Anspruch 1, wobei die schwefelhaltige Beschickung vor der Wasserstoffentschwefelung in einer Anzahl von Reaktionen mit unterschiedlichem Siedebereich fraktioniert wird, wobei die Fraktionen an in deren Längsrichtung räumlich getrennten Stellen in die erste Reaktionszone eingeführt werden.

49. Verfahren nach Anspruch 48, wobei die Beschickung in zwei oder drei Fraktionen fraktioniert wird.

50. Verfahren nach Anspruch 48, wobei die Beschickung in eine Fraktion mit 143°C+ (290°F+) und mindestens eine geringersiedende Fraktion fraktioniert wird.

51. Verfahren nach Anspruch 50, wobei die geringersiedende Fraktion eine Fraktion mit 93-143°C (200 bis 290°F) und/oder eine Fraktion mit $C_5$-65,5°C ($C_5$-150°F) einschließt.

52. Verfahren nach Anspruch 48, wobei die höchstsiedende dieser Fraktionen an deren Einlaß in die Reaktionszone eingeführt wird, wohingegen die immer geringer siedenden Fraktionen an immer weiter stromabwärts liegenden Stellen eingeführt werden.

53. Verfahren nach Anspruch 13, wobei der Zeolith mit mittlerer Porengröße Kristallite mit einem effektiven Radius von mindestens 0,25 µm umfaßt.

54. Verfahren nach Anspruch 53, wobei der Radius mindestens 0,5 µm beträgt.

55. Verfahren nach Anspruch 54, wobei der Radius mindestens 1 µm beträgt.

## Revendications

1. Procédé d'amélioration de la qualité d'un naphta oléfinique contenant du soufre craqué catalytiquement, bouillant dans l'intervalle d'ébullition des cssences. procédé comprenant les étapes suivantes :

   mise du naphta oléfinique contenant du soufre craqué catalytiquement au contact d'un catalyseur de désulfuration dans une première zone de réaction, en opérant sous une combinaison de température élevée, de pression élevée et d'une atmosphère contenant de l'hydrogène . pour former un produit intermédiaire comprenant une fraction normalement liquide et présentant une teneur en soufre abaissé et un indice d'octane abaissé par rapport à la charge ;
   dans une seconde zone de réaction, mise d'au moins la portion du produit intermédiaire bouillant dans l'intervalle des essences au contact d'un catalyseur à fonctionnalité acide en présence d'hydrogène pour effectuer le craquage des paraffines pour convertir le produit intermédiaire en un produit comprenant une fraction bouillant dans l'intervalle des essences et présentant un indice d'octane plus élevé que la fraction du produit intermédiaire bouillant dans l'intervalle des essences.

2. Le procédé selon la revendication 1 dans lequel la dite fraction traitée comprend une fi-action de naphta léger dont l'intervalle d'ébullition s'étend de celui des C6 à 165,5°C (330°F).

3. Le procédé selon la revendication 1 dans lequel la dite fraction traitée comprend la totalité d'une fi-action de naphta totale dont l'intervalle d'ébullition s'étend de celui des C5 à 215.5°C (420°F).

4. Le procédé selon la revendication 1 dans lequel la dite fraction traitée comprend une fraction lourde de naphta

**EP 0 641 375 B1**

dont l'intervalle de point d'ébullition s'étend de 165,5 à 260°C (330 à 500°F).

5. Le procédé selon la revendication 1 dans lequel la dite traction traitée comprend une fraction lourde de naphta dont l'intervalle de point d'ébullition s'étend de 165,5 à 211°C (330 à 412°F).

6. Le procédé selon la revendication 1 dans lequel la dite charge est une fraction de naphta craqué contenant des oléfines.

7. Le procédé selon la revendication 1 ou la revendication 6 dans lequel ladite fraction traitée comprend une fraction de naphta dont le point à 95% est d'au moins 163°C (325°F).

8. Le procédé selon la revendication 7 dans lequel la dite fraction traitée comprend une fraction de naphta dont le point à 95% est d'au moins 176,6°C (350°F).

9. Le procédé selon la revendication 8 dans lequel la dite fraction traitée comprend une fraction de naphta dont le point à 95% est d'au moins 193 °C (380°F).

10. Le procédé selon la revendication 9 dans lequel la dite fraction traitée comprend une fraction de naphta dont le point à 95% est d'au moins environ 204,5°C (400°F).

11. Le procédé selon la revendication 1 dans lequel la teneur en oléfines de la dite fraction traitée est au moins égale à 5 pour cent en poids.

12. Le procédé selon la revendication 1 dans lequel la teneur en oléfines de la dite fraction traitée est de 10 à 20 pour cent en poids, la teneur en soufre est de 100 à 5000 ppm en poids et la teneur en azote est de 5 à 250 ppm en poids.

13. Le procédé selon la revendication 1 dans lequel le catalyseur à fonctionnalité acide comprend une zéolite de dimension de pores intermédiaire.

14. Le procédé selon la revendication 13 dans lequel la zéolite présente la topologie des ZSM-5, ZSM-12 ou MCM-22.

15. Le procédé selon la revendication 13 dans lequel la dite zéolite est une géolite qui sorbe de 10 à 40 mg de 3-méthyl-pentane à 90°C, 90 torr, par gramme de zéolite sèche sous sa forme protonée.

16. Le procédé selon la revendication 15 dans lequel la dite zéolite est une ZSM-22, ZSM-23 ou ZSM-35.

17. Le procédé selon la revendication 1. dans lequel le catalyseur à fonctionnalité acide comprend une zéolite dont la topologie est celle d'une zéolite béta.

18. Le procédé selon la revendication 14, dans lequel le catalyseur à fonctionnalité acide comprend à la fois une zéolite dont la topologie est celle d'une ZSM-5 et une zéolite dont la topologie est celle d'une MCM-22.

19. Le procédé selon la revendication 17 . dans lequel le catalyseur à fonctionnalité acide comprend à la fois une zéolite dont la topologie est celle d'une ZSM-5 et une zéolite dont la topologie est celle d'une zéolite béta.

20. Le procédé selon la revendication 18 dans lequel le rapport pondéral de la ZSM-5 à la zéolite mentionnée en second est de 0,1:1 à 10:1.

21. Le procédé selon la revendication 15. dans lequel le catalyseur à fonctionnalité acide comprend à la fois une zéolite dont la topologie est celle d'une ZSM-5 et une zéolite qui sorbe de 10 à 40 mg de 3-méthyl-pentane à 90°C, 90 torr. par gramme de zéolite sèche sous sa forme protonée.

22. Le procédé selon la revendication 13 dans lequel au moins la portion du produit intermédiaire bouillant dans l'intervalle des essences est mise au contact d'un système de catalyseur présentant une fonctionnalité acide et comprenant à la fois une zéolite à grands pores et ladite zéolite à dimensions de pores intermédiaires.

23. Le procédé selon la revendication 22 dans lequel les zéolites à grands pores et à pores intermédiaires sont mises simultanément au contact de la dite portion du produit intermédiaire.

42

**24.** Le procédé selon la revendication 23 dans lequel les zéolites présentent la topologie de la faujasite et de la ZSM-5, respectivement.

**25.** Le procédé selon la revendication 22 dans lequel la zéolite à grands pores est une zéolite USY, REY ou ZSM-20.

**26.** Le procédé selon la revendication 22 dans lequel les zéolites à grands pores et à pores intermédiaires sont mises en contact séquentiellement, dans l'ordre indiqué, avec la dite portion du produit intermédiaire.

**27.** Le procédé selon la revendication 22 dans lequel les zéolites présentent respectivement les topologies d'une béta et d'une ZSM-5.

**28.** Le procédé selon la revendication 13 dans lequel au moins la portion bouillant dans l'intervalle des essences du produit intermédiaires est mis au contact d'une zéolite présentant une acidité superficielle abaissée.

**29.** Le procédé selon la revendication 28 dans lequel l'abaissement de l'activité superficielle de la zéolite est obtenue par traitement à la vapeur.

**30.** Le procédé selon la revendication 28 dans lequel l'abaissement de l'activité superficielle est obtenue, sans diminution sensible de l'activité acide totale, par mise de la zéolite au contact d'un acide dicarboxylique.

**31.** Le procédé selon la revendication 28 dans lequel l'acidité superficielle de la zéolite est abaissée d'au moins 25%, de préférence d'au moins 40%.

**32.** Le procédé selon la revendication 13 dans lequel la zéolite de dimension de pores intermédiaire se trouve sous la forme d'aluminosilicate.

**33.** Le procédé selon la revendication 1 dans lequel le catalyseur acide comprend un composant métallique doté d'une fonctionnalité d'hydrogénation.

**34.** Le procédé selon la revendication 1 dans lequel le catalyseur d'hydrodésulfuration comprend un métal du groupe VIII et un métal du groupe VI de la classification périodique des éléments.

**35.** Le procédé selon la revendication 1 dans lequel l'hydrodésulfuration est mise en oeuvre à une température de 205 à 427°C, une pression de 4,5 à 104,5 bars une vitesse spatiale d'environ 0,5 à 10 VSHL, et un rapport de l'hydrogène aux hydrocarbures d'environ 89 à 890 m3/m3 (500 à 5000 pieds cubes standard par baril) de charge.

**36.** Le procédé selon la revendication 35, dans lequel l'hydrodésulfuration est mise en oeuvre à une température de 260 à 399°C, une pression de 21,7 à 70 bars, une vitesse spatiale d'environ 1 à 6 VSHL , et un rapport de l'hydrogène aux hydrocarbures d'environ 178 à 445 m3/m3 (1000 à 2500 pieds cubes standard par baril) de charge.

**37.** Le procédé selon la revendication 1 dans lequel la seconde étape de l'amélioration de la qualité est mise en oeuvre à une température de 149 à 482°C, une pression de 4,5 à 105 bars une vitesse spatiale d'environ 0,5 à 10 VSHL, et un rapport de l'hydrogène aux hydrocarbures d'environ 0 à 890 m$^3$/m$^3$ (0 à 5000 pieds cubes standard par baril) de charge.

**38.** Le procédé selon la revendication 37 dans lequel la seconde étape de l'amélioration de la qualité est mise en oeuvre à une température de 177 à 477°C, une pression de 21,7 à 70 bars une vitesse spatiale d'environ 1 à 6 VSHL, et un rapport de l'hydrogène aux hydrocarbures d'environ 178 à 445 m3/m3 (1000 à 2500 pieds cubes standard par baril) de charge.

**39.** Le procédé selon la revendication 37 dans lequel l'amélioration de la qualité en seconde étape est mise en oeuvre à une température de 260 à 427°C, une pression de 21,7 à 70 bars une vitesse spatiale d'environ 1 à 6 VSHL , et un rapport de l'hydrogène aux hydrocarbures d'environ 178 à 445 m3/m3 (1000 à 2500 pieds cubes standard par baril) de charge.

**40.** Le procédé selon la revendication 1 qui est mis en oeuvre en mode cascade, la totalité de l'effluent de la première zone du réacteur passant dans la seconde zone de réaction.

**41.** Le procédé selon la revendication 1 qui est mis en oeuvre en 2 étapes avec une séparation intermédiaire des coupes légéres et des coupes lourdes, les coupes lourdes étant envoyées dans la seconde zone de réaction.

**42.** Le procédé selon la revendication 1 dans lequel la mise en contact dans la seconde zone de réaction est mise en oeuvre en présence d'hydrogène pratiquement débarassé d'hydrogène sulfuré.

**43.** Le procédé selon la revendication 42 dans lequel, dans la seconde zone de réaction. la pression partielle de l'hydrogène sulfuré ne dépasse pas 344,75 mbar (5 psia) et la pression partielle de l'ammoniac ne dépasse pas 6,895 mbar (0,1 psia).

**44.** Le procédé selon la revendication 1 dans lequel la mise en contact dans la seconde zone de réaction a lieu dans des conditions endothermiques et l'apport de chaleur est suffisant pour fournir au moins une partie de l'énergie thermique nécessaire à une telle conversion endothermique.

**45.** Le procédé selon la revendication 1 dans lequel la dite portion du produit intermédiaire est mis au contact du catalyseur dans la seconde zone de réaction en même temps qu'un réformat léger.

**46.** Le procédé selon la revendication 45 dans lequel le point d'ébullition terminal du réformat léger est compris entre 110 et 121°C (230 et 250°F).

**47.** Le procédé selon la revendication 45 dans lequel le réformat léger bout entre 38 et 100°C (100 et 212°F).

**48.** Le procédé selon la revendication 1 dans lequel, avant l'hydrodésulfuration, la dite charge contenant du soufre est fractionnée en une pluralité de fractions d'intervalle d'ébullition différent et ces fractions sont introduite dans la première zone de réaction en des points répartis suivant sa longueur.

**49.** Le procédé selon la revendication 48 dans lequel la dite charge est fractionnée en deux ou trois fractions.

**50.** Le procédé selon la revendication 48 dans lequel la dite charge cst fractionnée en une fraction 143°C+ (290°F+) et au moins une fraction de plus faible point d'ébullition.

**51.** Le procédé selon la revendication 50 dans lequel les dites fractions de plus faible point d'ébullition comprennent une fraction 93 à 143°C (200 à 290°F) et/ou une fraction de C5 à 65,5°C (C5 à 150°F).

**52.** Le procédé selon la revendication 48 dans lequel celle des dites fractions qui a le point d'ébullition le plus élevé est introduite dans la zone de réaction à son entrée alors que les fractions de point d'ébullition de plus en plus bas sont introduites en des points situés de plus en plus en aval.

**53.** Le procédé selon la revendication 13 dans laquelle la dite zéolite de dimension de pores intermédiaire comprend des cristallites d'un rayon efficace d'au moins 0,25 micromètre.

**54.** Le procédé selon la revendication 53 dans lequel le dit rayon est d'au moins 0,50 micromètre.

**55.** Le procédé selon la revendication 53 dans lequel le dit rayon est d'au moins 1 micromètre.

FIG. I

HEAVY FCC GASOLINE
OVERALL I.O LHSV, 600 psig (4,238 kPa)

HDS/ZSM-5

HDS ALONE

△ HDS/ZSM-5

HDS @ 700F (371 °C)

SULFUR, wt %

TEMPERATURE, °F (°C)

450 (232)  500 (260)  550 (288)  600 (316)  650 (343)  700 (371)  750 (399)  800 (927)

FIG. 2

FIG. 3

FIG. 4

FIG. 5

FIG. 6

FIG.7

FIG. 8

FIG. 9

FIG. 10

11
290°₊
13   H₂
34
12
24
10
14
200-290°
20
15
C₅-200
21
16
22
23
30
33
31
32
36
35
37

EP 0 641 375 B1

FIG.11

FIG.12

FIG. 13

FIG. 14

FIG.15